# FASCICULE DE BREVET EUROPEEN

(11) **EP 3 087 701 B1**
(45) Date de publication et mention de la délivrance du brevet: **06.02.2019**
(21) Numéro de dépôt: 14827824.5
(22) Date de dépôt: 12.12.2014
(51) Int. Cl.: H04L 12/723, H04L 12/26, H04L 12/24

(54) **PROCEDE DE DIAGNOSTIC DE FONCTIONS SERVICE DANS UN RESEAU IP**
VERFAHREN ZUR DIAGNOSE VON DIENSTFUNKTIONEN IN EINEM IP-NETZWERK
METHOD OF DIAGNOSIS OF SERVICE FUNCTIONS IN AN IP NETWORK

(30) Priorité: 23.12.2013 FR 1363426
(43) Date de publication de la demande: 02.11.2016
(73) Titulaire: Orange, 75015 Paris (FR)
(72) Inventeur: BOUCADAIR, Mohamed, F-35830 Betton (FR); JACQUENET, Christian, F-35131 Pont-Pean (FR)
(86) Numéro de dépôt international: PCT/FR2014/053304
(87) Numéro de publication internationale: WO 2015/097359

(56) Documents cités:
- US-A1- 2011 314 145
- US-B1- 6 457 143
- BOUCADAIR C JACQUENET FRANCE TELECOM R PARKER AFFIRMED NETWORKS D LOPEZ TELEFONICA I+D J GUICHARD C PIGNATARO CISCO SYSTEMS M ET A: "Service Function Chaining: Framework & Architecture; draft-boucadair-sfc-framework-00.txt", SERVICE FUNCTION CHAINING: FRAMEWORK & ARCHITECTURE; DRAFT-BOUCADAIR-SFC-FRAMEWORK-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 3 octobre 2013 (2013-10-03), pages 1-24, XP015092848,

## Description

La présente invention concerne le domaine des télécommunications, et notamment les réseaux de communications mettant en oeuvre le protocole IP (Internet Protocol). Plus particulièrement, la présente invention concerne la gestion des réseaux IP à valeur ajoutée, c'est-à-dire des réseaux capables d'effectuer des traitements de trafic différenciés selon la nature du trafic de données acheminé dans le réseau.

Dans le cadre de la présente invention, on désigne par « domaine IP » un ou plusieurs réseau(x) IP placé(s) sous la responsabilité d'une seule entité administrative. Un « domaine IP » peut en particulier désigner un réseau opéré par un fournisseur de service de connectivité IP.

Ces traitements de trafic différenciés sont mis en oeuvre dans un domaine IP au moyen de dispositifs appelés « fonctions service » (« *Service Function* » en anglais), désignées ci-dessous par « fonction SF ». Parmi les fonctions SF couramment utilisées, on trouve, par exemple :
- des fonctions de qualité de service, telles que le marquage et la classification du trafic, ou le conditionnement et l'ordonnancement du trafic,
- des fonctions de sécurité, telles que le chiffrement du trafic, la mise en place et l'activation de filtres définis selon des listes de contrôle d'accès maintenues par certains routeurs du réseau IP, ainsi que de pare-feux IPv4 ou IPv6,
- des fonctions NAT (initiales des mots anglais « *Network Address Translation* » signifiant « Traduction d'Adresse Réseau »), ou NAT64 (mécanisme permettant à des clients IPv6 de communiquer avec des serveurs IPv4),
- des fonctions sonde, telles que DPI (initiales des mots anglais « *Deep Packet Inspection* » signifiant « Inspection des Paquets en Profondeur »), par exemple à des fins de contrôle parental,
- des fonctions de personnalisation ou optimisation des connexions Internet, telles que « TCP Optimizer »,
- des fonctions d'optimisation de contenu vidéo (par exemple, fonction de cache), ou encore
- des fonctions d'insertion d'informations dans les en-têtes HTTP (Hypertext Transfer Protocol), par exemple «X-FF » (X-Forwarded-For) ou « Forwarded ».

Les fonctions SF peuvent être hébergées par des équipements de toute nature, par exemple un routeur, un serveur ou un commutateur. Par ailleurs, un même équipement peut héberger une ou plusieurs fonction(s) SF.

Dans le cadre de la présente invention, on dira qu'un noeud d'un domaine IP est « associé » à une fonction SF lorsque cette fonction SF est hébergée sur ce noeud ou accessible *via* ce noeud ; de plus, un noeud associé à au moins une fonction SF sera appelé « noeud SF ».

La mise en place d'un service à valeur ajoutée fondé sur une politique d'acheminement de trafic différenciée (telle qu'une politique d'acheminement et de routage du trafic, ou de qualité de service, ou encore de sécurité comme le chiffrement des données transmises) requiert généralement la combinaison d'une pluralité de fonctions SF (pouvant par ailleurs être hébergées sur un ou plusieurs noeud(s) du réseau), le cas échéant selon un ordre caractéristique du sens du trafic (par exemple, de l'Internet vers un terminal, ou d'un terminal vers l'Internet), pour former des chaînes fonctionnelles. On appelle « chaîne de fonctions service » (« *Service Function Chain* » en anglais, désignée par SFC ci-dessous), une suite ordonnée de fonctions SF. En d'autres termes, le chaînage de fonctions service indique la liste des fonctions SF qui doivent être sollicitées pour le traitement d'un flux de données caractéristique dudit service, ainsi que l'ordre dans lequel ces fonctions doivent être sollicitées séquentiellement pour traiter ce flux. On notera que les chaînes de fonctions service associées à chaque direction de trafic (trafic entrant vs. trafic sortant) peuvent être identiques ou distinctes.

Par exemple, le trafic TCP (Transmission Control Protocol) issu de clients qui ne disposent que d'une pile protocolaire IPv6 peut impliquer le chaînage d'une fonction d'optimisation TCP, d'une fonction pare-feu IPv6 et d'une fonction NAT64 pour permettre à ces clients d'accéder à un contenu IPv4 disponible sur l'Internet ; et le traitement du trafic TCP destiné à de tels clients IPv6 peut impliquer le chaînage d'une fonction pare-feu IPv4 et d'une fonction NAT64 pour permettre à ces clients de recevoir ledit contenu IPv4 disponible sur l'Internet. Un autre exemple est celui d'un service de réseau privé virtuel (RPV) sur IP, qui fait appel à des fonctions d'acheminement et de routage combinées à des fonctions de qualité de service et de sécurité réparties dans différents éléments composant le réseau support du RPV, ou dans des éléments connectés à ce réseau support, tels qu'un pare-feu.

Un moyen d'indication explicite (par exemple un marquage véhiculé par chaque paquet appartenant à un flux donné) peut alors être utilisé pour indiquer aux équipements hébergeant les fonctions SF individuelles de quelle chaîne elles font partie pour traiter le, ou les flux associé(s) à cette chaîne. Chaque équipement hébergeant au moins une fonction SF individuelle composant une SFC se réfère alors à cette indication explicite pour décider de la manière dont chaque paquet appartenant audit flux devra être traité.

Si aucun moyen d'indication explicite n'est utilisé, des fonctions dites « de classification » peuvent être activées pour déterminer si une fonction SF donnée doit être invoquée ou non. Un noeud associé à au moins une fonction de classification est appelé « classificateur » ; un classificateur est donc un dispositif du domaine IP chargé, en fonction des SFC disponibles au sein de ce domaine IP, de classer les différents trafics et d'invoquer les fonctions SF dans l'ordre adéquat.

Les techniques de chaînage de fonctions service sont récentes. L'état de l'art montre que les premiers développements de cette technique de chaînage de fonctions service s'appuient sur des approches monolithiques et mono-constructeurs.

Ainsi, l'article de M. Boucadair, C. Jacquenet, R. Parker, D. Lopez, J. Guichard et C. Pignataro intitulé « Differentiated Service Function Chaining Framework » (disponible à l'adresse http://tools.ietf.org/html/draft-boucadair-sfc-framework-00), décrit une procédure de création de chaîne de fonctions service. De plus, il décrit une architecture générique de chaînage de fonctions service, ainsi que les entités fonctionnelles nécessaires pour la mise en place d'une telle architecture. Cet article attribue notamment la responsabilité de la construction de SFC à des entités appelées « PDP » (initiales des mots anglais « *Policy Décision Point* » signifiant « Point de Décision de Politique »).

On rappelle à cet égard que le groupe de travail RAP (en anglais « Resource Allocation Protocol ») de l'IETF (en anglais « Internet Engineering Task Force ») a défini, dans le document RFC 2753, une architecture fonctionnelle spécifique à la gestion de réseaux mettant en oeuvre une ou plusieurs politiques de traitements de trafic différenciés. Cette architecture définit en particulier des dispositifs nommés PDP, qui sont responsables de la prise de décisions relatives à la structuration d'un service reposant sur un ensemble de fonctions SF, et de la notification de ces décisions aux noeuds du réseau impliqués dans le déploiement et l'exploitation dudit service. En particulier, le PDP est responsable de la prise des décisions reflétant différentes politiques de traitements de trafic différenciés qui doivent être exécutées par un ou plusieurs noeuds du réseau, et qui conduisent à la configuration des fonctions *ad hoc* dans les noeuds du réseau concernés. Les dispositifs PDP peuvent être hébergés, par exemple, dans un serveur, une passerelle, ou un routeur.

Dans le cadre de la présente invention, on appellera « noeud PDP » un noeud hébergeant ou donnant accès à un dispositif PDP. On notera qu'un noeud d'un réseau IP peut, éventuellement, être associé à la fois à un dispositif PDP, et à une ou plusieurs fonctions SF.

Selon l'article de Boucadair *et al.* mentionné ci-dessus, le PDP communique à des noeuds SF ou à des noeuds hébergeant une fonction de classification de flux (ou à une combinaison des deux), les instructions relatives à la mise en place de politiques de traitement de trafic différenciés, qui sont caractérisées par diverses SFC utilisées pour traiter l'ensemble des flux de trafic acheminés dans le réseau selon leur nature. L'article indique notamment que le PDP doit avoir connaissance de la liste des fonctions service actives dans le réseau ainsi que de leur localisation.

Une fois ces SFC structurées par le PDP, elles sont communiquées aux noeuds du réseau. Elles peuvent par exemple être communiquées sous la forme d'une cartographie descriptive des fonctions SF qui doivent être exécutées selon un certain ordre pour un certain type de trafic de données associé à ladite cartographie. La réception de cette cartographie permet en particulier à un noeud du réseau de déterminer sa position dans la SFC et de solliciter, conformément aux instructions de la SFC, les fonctions SF qui lui sont associées, et de déterminer ensuite quel est le noeud SF suivant vers lequel le trafic doit être transféré.

L'homme du métier comprendra aisément qu'une procédure de diagnostic de fonctions SF et de SFC est un complément naturel et nécessaire à la technique de chaînage de fonctions SF dans le cadre de la mise en place et de l'exploitation de services réseau complexes (c'est-à-dire faisant appel à un ordonnancement de différentes fonctions service élémentaires). Par exemple, une procédure de diagnostic est notamment requise dans des environnements de services à valeur ajoutée tels que :
- les services de télémédecine, pour lesquels la capacité de garantir l'acheminement du trafic caractéristique de la surveillance de données biométriques (en temps réel par exemple) passe par le chaînage intelligent de fonctions d'ingénierie de trafic (calcul et établissement de routes dont les caractéristiques en termes de performance et de robustesse sont compatibles avec la nature dudit trafic), de qualité de service (par exemple, fonctions de priorisation de trafic), et de sécurité (par exemple, chiffrement des données avant transmission sur le réseau) ; la nature même de ce type de service exige des procédures de diagnostic adaptées à la fois en termes d'automatisation des processus de diagnostic et de performances de ces processus ; ou
- les services de réseaux privés virtuels (RPV), dont l'ingénierie et l'exploitation doivent être conformes au contrat négocié avec le client dudit service ; un service de RPV s'appuie sur une combinatoire de fonctions service souvent complexes (par exemple, fonctions d'acheminement et de routage du trafic au sein du RPV, fonctions de classification, marquage et conditionnement du trafic acheminé au sein du RPV, fonctions de sécurité telles que l'activation de filtres d'accès et de pare-feux destinés à protéger l'accès aux sites connectés au travers du RPV), et qui nécessitent de disposer d'outils de diagnostic fiables et performants ; le processus de diagnostic des fonctions service sollicitées pour un RPV contribue à garantir au client que le service fourni est conforme à ce qui a été négocié entre lui et l'opérateur du réseau.

On connaît, pour déterminer si une machine IP est joignable au sens du routage IP, des mécanismes tels que ceux fournis par le protocole ICMP (initiales des mots anglais « *Internet Control Message Protocol* » signifiant « Protocole de Messages de Contrôle Internet »). Cependant, le fait qu'une fonction SF soit accessible au niveau IP ne signifie pas qu'elle est opérationnelle. De plus, pour toute SFC donnée, les messages ICMP sont véhiculés le long des routes IP établies classiquement dans le réseau, et non le long des routes empruntées par le trafic faisant l'objet d'une SFC, qui peuvent être différentes des routes IP classiques.

Par exemple, une fonction DS-Lite AFTR (Address Family Transition Router), telle que définie dans le document RFC 6333 de l'IETF (cette fonction AFTR agit comme un routeur facilitant la transition de l'Internet IPv4 vers l'Internet IPv6, et embarque notamment des fonctions SF de type NAT et de type encapsulation), pourrait ne pas être opérationnelle bien que répondant à des messages ICMP : en effet, la fonction AFTR est opérationnelle si, et seulement si, les composantes encapsulation/décapsulation IPv4-in-IPv6, et NAT sont toutes deux opérationnelles.

Le protocole ICMP souffre de plusieurs inconvénients. En particulier :
- il ne détecte pas l'indisponibilité éventuelle d'une fonction SF, pourtant joignable ;
- il ne fournit pas de diagnostic d'une fonction SF, d'une SFC ou d'un sous-ensemble de fonctions SF au sein d'une SFC (un tel sous-ensemble sera appelé « séquence de fonctions SF» dans le cadre de la présente invention) ;
- il ne fournit pas de diagnostic des règles de classification du trafic (on appelle « règles de classification » les règles utilisées pour acheminer le trafic dans le réseau en fonction de la SFC à laquelle un trafic donné est associé) ;
- il ne permet pas de calculer le délai et la gigue associés à l'acheminement du trafic faisant l'objet d'une SFC au sein du réseau ;
- il ne permet pas de vérifier que la liste de fonctions SF correspond bien à ce qui a été configuré par l'entité administrative en charge de l'exploitation du réseau ; et
- il ne permet pas de sélectionner une fonction SF opérationnelle parmi une pluralité de fonctions SF de même nature, de telle sorte que la SFC puisse être composée d'un ensemble de fonctions SF réputées opérationnelles suite à la procédure de diagnostic.

La présente invention concerne donc, selon un premier aspect, divers procédés de diagnostic de fonctions service dans un réseau IP.

Elle concerne ainsi, premièrement, un procédé de diagnostic de fonctions service, dans un domaine IP comprenant au moins un noeud, dit noeud PDP, responsable de la prise de décisions relatives à la structuration d'une chaîne de fonctions service reposant sur un ensemble de fonctions service, dites fonctions SF, et de la notification de ces décisions à d'autres noeuds dudit domaine IP, et au moins un noeud, dit noeud SF, associé à au moins une fonction SF hébergée sur ledit noeud SF ou accessible *via* ledit noeud SF. Ledit procédé est remarquable en ce qu'il comprend les étapes suivantes :
- un noeud, dit noeud diagnostiqueur, envoie une requête à un noeud SF, dit noeud diagnostiqué, concernant une fonction SF, dite fonction diagnostiquée, qui est identifiée dans la requête et/ou qui est la seule fonction SF associée audit noeud diagnostiqué,
- le noeud diagnostiqué réalise au moins une opération de diagnostic concernant ladite fonction diagnostiquée, et
- le noeud diagnostiqué envoie une réponse audit noeud diagnostiqueur, ladite réponse comprenant au moins l'indication du succès ou de l'échec de l'opération de diagnostic, ou du non-fonctionnement, ou du dysfonctionnement, de la fonction diagnostiquée.

L'invention concerne aussi, deuxièmement, un procédé de diagnostic de fonctions service, dans un domaine IP comprenant au moins un noeud, dit noeud PDP, responsable de la prise de décisions relatives à la structuration d'une chaîne de fonctions service reposant sur un ensemble de fonctions service, dites fonctions SF, et de la notification de ces décisions à d'autres noeuds dudit domaine IP, et au moins un noeud, dit noeud SF, associé à au moins une fonction SF hébergée sur ledit noeud SF ou accessible *via* ledit noeud SF. Ledit procédé est remarquable en ce qu'il comprend une étape au cours de laquelle un noeud du réseau, dit noeud diagnostiqueur, envoie une requête de diagnostic comprenant au moins un identifiant, dit identifiant de liste, d'une liste ordonnée d'identifiants de fonctions SF ou d'adresses IP de noeuds SF, et en ce qu'il comprend en outre les étapes itératives suivantes :
- un noeud, dit noeud diagnostiqué, associé à une fonction SF, dite fonction diagnostiquée, faisant partie de ladite liste ordonnée, reçoit une requête comprenant au moins ledit identifiant de liste,
- le noeud diagnostiqué effectue au moins une opération de diagnostic concernant ladite fonction diagnostiquée, et
- si ladite opération de diagnostic est réalisée avec succès, le noeud diagnostiqué envoie une requête comprenant au moins ledit identifiant de liste à un noeud SF associé à la fonction SF qui fait suite, dans ladite liste ordonnée, à la fonction diagnostiquée,
et en ce que :
- si une opération de diagnostic échoue, ou montre que la fonction SF diagnostiquée n'est pas opérationnelle, le noeud diagnostiqué émet une réponse comprenant au moins l'indication de l'échec de l'opération de diagnostic, ou du non-fonctionnement, ou du dysfonctionnement, de la fonction diagnostiquée, ou
- si en revanche toutes les opérations de diagnostic ont été réalisées avec succès, le noeud diagnostiqué associé à la dernière fonction SF de la liste ordonnée émet une réponse comprenant au moins un résultat de succès du diagnostic.

L'invention concerne aussi, troisièmement, un procédé de diagnostic de fonctions service, dans un domaine IP comprenant au moins un noeud, dit noeud PDP, responsable de la prise de décisions relatives à la structuration d'une chaîne de fonctions service reposant sur un ensemble de fonctions service, dites fonctions SF, et de la notification de ces décisions à d'autres noeuds dudit domaine IP, et au moins un noeud, dit noeud SF, associé à au moins une fonction SF hébergée sur ledit noeud SF ou accessible *via* ledit noeud SF. Ledit procédé est remarquable en ce qu'il comprend une étape au cours de laquelle un noeud du réseau, dit noeud diagnostiqueur, envoie une requête de diagnostic comprenant au moins un identifiant d'une chaîne de fonctions SF, notée SFC, ainsi que, optionnellement, un identifiant, dit identifiant de fin de séquence, d'une fonction SF terminant une séquence incluse dans ladite SFC, et en ce qu'il comprend en outre les étapes itératives suivantes :
- un noeud, dit noeud diagnostiqué, associé à une fonction SF, dite fonction diagnostiquée, faisant partie de ladite SFC ou, le cas échéant, de ladite séquence, reçoit une requête comprenant au moins ledit identifiant de la SFC et, le cas échéant, ledit identifiant de fin de séquence,
- le noeud diagnostiqué effectue au moins une opération de diagnostic concernant ladite fonction diagnostiquée, et
- si ladite opération de diagnostic est réalisée avec succès, le noeud diagnostiqué envoie une requête comprenant au moins l'identifiant de la SFC et, le cas échéant, l'identifiant de fin de séquence, à un noeud SF associé à la fonction SF qui fait suite, dans la SFC, à la fonction diagnostiquée,
et en ce que :
- si une opération de diagnostic échoue, ou montre que la fonction SF diagnostiquée n'est pas opérationnelle, le noeud diagnostiqué émet une réponse comprenant au moins l'indication de l'échec de l'opération de diagnostic, ou du non-fonctionnement, ou du dysfonctionnement, de la fonction diagnostiquée, ou
- si en revanche toutes les opérations de diagnostic ont été réalisées avec succès, le noeud diagnostiqué associé à la dernière fonction SF de la SFC ou, le cas échéant, à la fonction SF identifiée par l'identifiant de fin de séquence, émet une réponse comprenant au moins un résultat de succès du diagnostic.

Grâce à ces dispositions :
- on peut qualifier le bon fonctionnement des fonctions SF impliquées dans l'acheminement de différents trafics dans le réseau, détecter l'indisponibilité d'une ou plusieurs fonctions SF, et améliorer le temps d'établissement du diagnostic, et partant, le temps de rétablissement du service en cas de défaillance constatée lors de l'exécution d'une ou plusieurs fonctions SF composant une même chaîne ou des chaînes différentes ;
- on peut qualifier les performances d'exécution de tout ou partie des fonctions SF composant une SFC, et ainsi contribuer à la qualification d'un niveau de qualité associé au traitement d'un trafic donné par la SFC ; et
- on dispose d'une aide à la décision dans divers contextes, par exemple pour pouvoir sélectionner des instances de la même fonction SF situées en des endroits différents (et identifiées par plusieurs adresses IP distinctes, par exemple) à des fins d'optimisation de la répartition de la charge de trafic, ou d'adéquation d'une SFC au regard de la nature ou des contraintes du trafic qui doit être traité par cette SFC ; cette décision peut être de différents types, par exemple la sélection de fonctions SF en remplacement de fonctions SF défectueuses au sein d'une chaîne donnée, ou l'établissement de nouvelles routes destinées à optimiser la répartition de la charge du trafic en utilisant les fonctions SF de même nature et disponibles à différents endroits dans le réseau.

On notera qu'un PDP peut avoir besoin de corréler des alarmes réseau avec les résultats des procédés de diagnostic succinctement décrits ci-dessus. En particulier, pour déterminer si une fonction SF est injoignable à cause d'une panne réseau (c'est-à-dire, un problème de connectivité), et non à cause de la fonction SF elle-même, le PDP doit mettre en oeuvre une procédure de diagnostic réseau adéquate ; par exemple, le PDP peut utiliser une procédure de « trace-route » classique pour parcourir le chemin entre deux fonctions SF ; le PDP peut également demander à une fonction SF distante d'exécuter cette procédure de traçage de chemin et de rapporter les résultats au PDP (ces méthodes de corrélation entre la couche réseau et la couche service ne sont bien sûr fournies qu'à titre d'exemple).

On notera par ailleurs que l'invention est avantageusement compatible avec tous les types de réseaux IP (fixes ou mobiles), et avec la grande majorité des protocoles de routage connus. Elle peut être mise en oeuvre au niveau IP ou MPLS (Multi-Protocol Label Switching). En outre, elle encourage des extensions à des protocoles tels qu'ICMP ou CoAP (Constrained Access Protocol), ces extensions étant de nature à enrichir les capacités fonctionnelles de ces protocoles.

On notera que ledit noeud diagnostiqueur peut aussi bien être un noeud PDP qu'un noeud SF.

Selon un deuxième aspect, l'invention concerne divers dispositifs.

Elle concerne ainsi, premièrement, un noeud, dit noeud diagnostiqueur, dans un domaine IP comprenant au moins un noeud, dit noeud PDP, responsable de la prise de décisions relatives à la structuration d'une chaîne de fonctions service reposant sur un ensemble de fonctions service, dites fonctions SF, et de la notification de ces décisions à d'autres noeuds dudit domaine IP, et au moins un noeud, dit noeud SF, associé à au moins une fonction SF hébergée sur ledit noeud SF ou accessible *via* ledit noeud SF. Ledit noeud diagnostiqueur est remarquable en ce qu'il possède des moyens pour :
- envoyer une requête de diagnostic à un noeud SF, dit premier noeud diagnostiqué, associé à une fonction SF, dite première fonction diagnostiquée, et
- recevoir une réponse de la part d'un noeud SF, dit dernier noeud diagnostiqué, associé à une fonction SF, dite dernière fonction diagnostiquée, ladite réponse comprenant au moins l'indication du succès ou de l'échec de l'opération de diagnostic, ou du non-fonctionnement, ou du dysfonctionnement, de ladite dernière fonction diagnostiquée.

Selon des caractéristiques particulières :
- lesdits premier et dernier noeuds diagnostiqués sont identiques,
- lesdites première et dernière fonctions diagnostiquées sont identiques, et
- la fonction SF diagnostiquée est identifiée dans la requête et/ou est la seule fonction SF associée au noeud diagnostiqué.

Selon d'autres caractéristiques particulières :
- ladite requête de diagnostic comprend au moins un identifiant, dit identifiant de liste, d'une liste ordonnée d'identifiants de fonctions SF ou d'adresses IP de noeuds SF, et
- lesdites première et dernière fonctions diagnostiquées font partie de ladite liste ordonnée.

Selon encore d'autres caractéristiques particulières :
- ladite requête de diagnostic comprend au moins un identifiant d'une chaîne de fonctions SF, notée SFC, ainsi que, optionnellement, un identifiant, dit identifiant de fin de séquence, d'une fonction SF terminant une séquence incluse dans ladite SFC, et
- lesdites première et dernière fonctions diagnostiquées font partie de ladite SFC et, le cas échéant, de ladite séquence.

L'invention concerne aussi, deuxièmement, un noeud, dit noeud diagnostiqué, dans un domaine IP comprenant au moins un noeud, dit noeud PDP, responsable de la prise de décisions relatives à la structuration d'une chaîne de fonctions service reposant sur un ensemble de fonctions service, dites fonctions SF, et de la notification de ces décisions à d'autres noeuds dudit domaine IP, et au moins un noeud, dit noeud SF, associé à au moins une fonction SF hébergée sur ledit noeud SF ou accessible *via* ledit noeud SF. Ledit noeud diagnostiqué est un noeud SF remarquable en ce qu'il possède des moyens pour :
- recevoir de la part d'un noeud du domaine IP une requête de diagnostic concernant une fonction SF, dite fonction diagnostiquée, associée audit noeud diagnostiqué, et
- réaliser au moins une opération de diagnostic concernant ladite fonction diagnostiquée.

Selon des caractéristiques particulières, ledit noeud diagnostiqué possède en outre des moyens pour émettre une réponse comprenant au moins l'indication du succès ou de l'échec de l'opération de diagnostic, ou du non-fonctionnement, ou du dysfonctionnement, de ladite fonction SF diagnostiquée.

Selon d'autres caractéristiques particulières, ledit noeud diagnostiqué possède en outre des moyens pour transmettre ladite requête de diagnostic à un autre noeud SF associé à une fonction SF visée dans la requête de diagnostic.

Selon un troisième aspect, l'invention concerne un système de diagnostic de fonctions service dans un domaine IP. Ledit système est remarquable en ce qu'il comprend au moins un noeud diagnostiqueur et au moins un noeud diagnostiqué tels que décrits succinctement ci-dessus.

Les avantages offerts par ces dispositifs et ce système sont essentiellement les mêmes que ceux offerts par les procédés de diagnostic de fonctions service succinctement exposés ci-dessus.

On notera qu'il est possible de réaliser ces dispositifs dans le contexte d'instructions logicielles et/ou dans le contexte de circuits électroniques.

L'invention vise également un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour l'exécution des étapes de l'un quelconque des procédés de diagnostic de fonctions service succinctement exposés ci-dessus, lorsqu'il est exécuté sur un ordinateur.

Les avantages offerts par ce programme d'ordinateur sont essentiellement les mêmes que ceux offerts par lesdits procédés.

D'autres aspects et avantages de l'invention apparaîtront à la lecture de la description détaillée ci-dessous de modes de réalisation particuliers, donnés à titre d'exemples non limitatifs. La description se réfère aux figures qui l'accompagnent, dans lesquelles :
- la figure 1 représente schématiquement un exemple de réseau apte à mettre en oeuvre l'invention,
- les figures 2 et 3 illustrent respectivement un format de message ICMP SF Diag Request et un format de message ICMP SF Diag Response, selon un mode de réalisation de l'invention, et
- la figure 4 illustre un format classique d'objet ICMP.

Considérons un réseau IP comportant, d'une part, au moins un noeud PDP, et d'autre part des noeuds *Nᵢ,* où i ≥ 1.

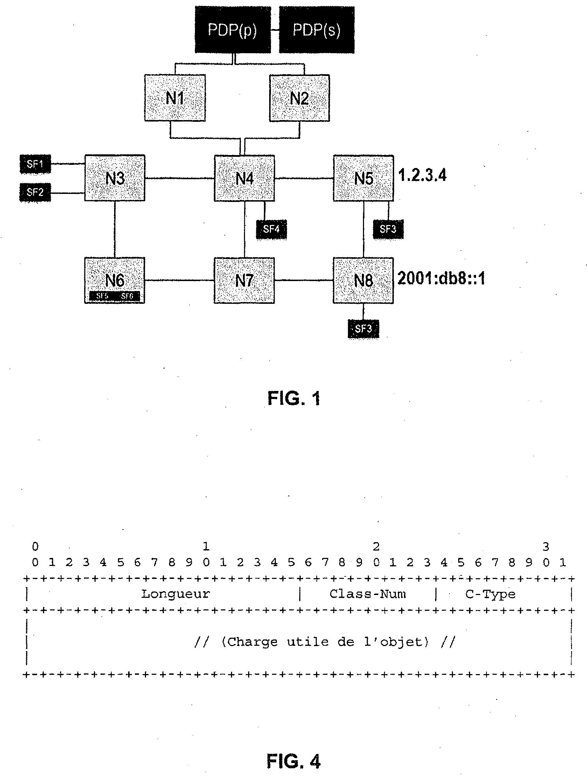

A titre d'exemple, la **figure 1** représente schématiquement un réseau IP comprenant un noeud PDP dit « primaire », noté PDP(p) sur la figure, et un noeud PDP dit « secondaire », noté PDP(s) sur la figure. En effet, il est conseillé de prévoir de manière générale dans les réseaux IP au moins un PDP secondaire en plus du PDP primaire, afin d'améliorer la robustesse et la disponibilité du dispositif PDP en cas de panne, et de permettre une répartition de charge. Néanmoins, la présente invention peut évidemment être mise en oeuvre dans une configuration où un seul PDP est actif.

Le réseau de la figure 1 comprend également 8 noeuds qui n'embarquent pas de fonction PDP, et qui sont notés N1 à N8. Le noeud N6 héberge une fonction SF5 et une fonction SF6. Le noeud N3 est raccordé à un domaine IP hébergeant une fonction SF1 et une fonction SF2. Le noeud N4 est raccordé à un domaine IP hébergeant une fonction SF4. Les noeuds N5 et N8 sont raccordés chacun à un domaine IP hébergeant une fonction SF3. Enfin, les noeuds N1, N2 et N7 ne sont associés à aucune fonction SF.

Le noeud PDP (primaire ou secondaire) associe à chaque fonction SF un identifiant que nous appellerons « Service_Function_Identifier ». Cet identifiant désigne d'une manière univoque une fonction atomique (par exemple NAT, ou pare-feu). L'identifiant de la fonction SF est structuré comme une chaîne de caractères. D'autres schémas d'identification de SF peuvent être adoptés au sein d'un même domaine IP. Cet identifiant sera généralement alloué par l'entité administrative qui gère le domaine IP.

Comme illustré sur la figure 1, une même fonction SF (en l'occurrence, la fonction SF3) peut être hébergée par plusieurs noeuds SF ; par conséquent, plusieurs adresses IP peuvent être associées au même identifiant d'une fonction SF, à des fins de localisation des différentes instances de cette fonction SF dans le réseau. On notera que ces adresses IP peuvent être de la même famille (c'est-à-dire, IPv4, IPv6, ou autre), ou de familles différentes.

Chacune de ces adresses IP représente la valeur d'un attribut appelé « Service_Function_Service_Locator ». Ainsi, chaque fonction SF possède un identifiant (Service_Function_Identifier) globalement unique à l'échelle du domaine IP, mais une fonction SF donnée peut avoir plusieurs attributs Service_Function_Service_Locator, selon le nombre et la localisation des instances de cette fonction SF dans le domaine IP. Par exemple, dans le réseau de la figure 1, la fonction SF3 pourrait être joignable avec :
Service_Function_Service Locator ==1.2.3.4 (adresse IPv4 du noeud N5), et
Service_Function_Service Locator == 2001 :db8::1 (adresse IPv6 du noeud N8).

Le PDP maintient une liste des attributs Service_Function_Service_Locator pour chaque fonction SF identifiée par un identifiant Service_Function_Identifier qui lui est propre.

On peut définir en outre au moins un profil pour une fonction SF donnée. Par définition, un profil est associé à une politique (par exemple, une politique de routage, de sécurité, ou de qualité de service) utilisant en particulier cette fonction SF. Par exemple, pour une fonction pare-feu, un premier profil peut être un filtre de contrôle parental pour des enfants ; un deuxième profil peut être un filtre de contrôle parental pour des adultes.

En plus de la liste d'identifiants, d'attributs et de profils de fonctions SF, le PDP maintient une liste de SFC instanciées dans le domaine IP. Voici un exemple d'une liste de SFC :
Chaîne_1 = SF1, SF3, SF5
Chaîne_2 = SF2, SF1, SF6
Chaîne_3 = SF3, SF4, SF6, SF5
Chaîne_4 = SF2, SF6 (Profile_1), SF4
Chaîne_5 = SF1, SF6 (Profile_2, Profile_3), SF5

L'invention permet de lancer des opérations de diagnostic, qui peuvent, en pratique, être réalisées selon toute méthode connue. On peut par exemple produire un paquet de test pour diagnostiquer une fonction SF ; un tel paquet de test peut être par exemple un message RTP (Real-Time Transport Protocol) pour vérifier si une fonction SF est compatible avec un codec (codeur/décodeur) donné, ou un paquet IPv4 encapsulé dans un paquet IPv6 pour vérifier si une fonction DS-Lite se comporte conformément aux instructions qu'elle a reçues relatives au traitement des paquets qu'elle reçoit. Une autre méthode de diagnostic consiste à utiliser les ressources d'un module préconfiguré associé à un noeud SF ; ce module peut être configuré « en dur» dans le dispositif (on appelle cela un « *watchdog* »), ou être configuré au moyen d'une commande émise par un administrateur du domaine IP.

Pour requérir des opérations de diagnostic, l'invention utilise un premier type de message de diagnostic, que l'on appellera « DIAG_REQ() ». Cette primitive peut avoir comme arguments un ou plusieurs des attributs suivants :
∘ Service_Function Map_Index : cet attribut renseigne l'identifiant de la SFC ; la valeur « 0 » de cet attribut signifie que le noeud destinataire du message DIAG_REQ() doit effectuer une opération de diagnostic pour l'ensemble des SFC auxquelles appartient une fonction SF donnée ; cet attribut est optionnel ;
∘ Service_Function_Identifier : cet attribut renseigne l'identifiant de ladite fonction SF donnée ; cet attribut est optionnel, car il n'est pas absolument nécessaire de fournir cet attribut dans le cas d'un noeud SF associé à cette fonction SF donnée, et à aucune autre ;
∘ Service_Function_Profile_ID : cet attribut renseigne l'identifiant d'un profil de configuration d'une fonction SF ; cet attribut est optionnel ; un message de diagnostic peut contenir plusieurs identifiants de profil ;
∘ Tail_SF : cet attribut est optionnel ; si présent, il indique, dans une séquence de fonctions SF au sein d'une SFC, la dernière fonction SF concernée par une opération de diagnostic ;
∘ Request_Identifier : cet attribut est obligatoire pour corréler une requête avec la réponse à cette requête ;
∘ Request_Sequence_Number : cet attribut est utilisé pour distinguer les différents messages de diagnostic en cas de retransmission ;
∘ Timestamp : cet attribut est utilisé pour inclure l'horodatage d'envoi de la requête ;
∘ ORIGINAL_DIAG_REQ() : en cas de diagnostic d'une SFC ou d'une séquence de fonctions SF, le message DIAG_REQ() original est de préférence encapsulé dans une autre requête de diagnostic DIAG_REQ(), qui est envoyée à un noeud associé à la prochaine fonction SF de la chaîne ou de la séquence ;
∘ Test_Packet : cet attribut est optionnel ; comme mentionné ci-dessus, on peut inclure un paquet de test pour diagnostiquer une fonction SF ; on peut également inclure un paquet de test pour d'autres opérations de diagnostic, ou, par exemple, pour vérifier les règles de classification, ou encore pour corréler les règles de classification avec les décisions de transfert du trafic ; et
∘ Recorded_Service_Function_Map : cet attribut est optionnel ; il renseigne la liste ordonnée des identifiants des fonctions SF traversées par un message de diagnostic.

Pour les compte-rendus de résultats d'opérations de diagnostic, l'invention utilise un second type de message de diagnostic, que l'on appellera « DIAG_RES() ». Cette primitive peut avoir comme arguments un ou plusieurs des attributs suivants :
∘ les mêmes attributs qu'une requête DIAG_REQ(), à l'exception de l'attribut Tail_SF qui est absent dans les messages DIAG_RES() ;
∘ STATUS : cet attribut indique explicitement le résultat de l'opération de diagnostic ; deux codes sont définis pour cet attribut :
   ▪ « SUCCESS » : indique que l'opération de diagnostic a été réalisée avec succès ;
   ▪ « FAIL » : ce code est utilisé pour indiquer l'échec de l'opération de diagnostic ;
∘ Error_Code : cet attribut inclut la raison d'un échec de l'opération de diagnostic ; ces codes d'erreur peuvent être notamment les suivants :
   ▪ « INACTIVE » : ce message indique que la fonction SF est en principe associée au noeud émetteur du message DIAG_RES(), mais qu'elle est désactivée ;
   ▪ « BEING CONFIGURED » : ce message indique que la fonction SF est en cours de configuration ;
   ▪ « NOT_FOUND » : ce code indique que la fonction SF n'est pas associée au noeud émetteur du message DIAG_RES() ;
   ▪ « NO_RESOURCES » : ce code indique que le noeud SF associé à ladite fonction SF n'a pas suffisamment de ressources (par exemple, en cas de congestion de lien, ou de seuil CPU critique) ;
   ▪ « PROHIBITED » : ce code indique que la requête de diagnostic n'est pas autorisée ;
   ▪ « RETRY AFTER » : ce code indique qu'il faut envoyer une nouvelle requête de diagnostic à l'expiration d'une certaine période ; ce code d'erreur peut être envoyé par exemple par un noeud SF dans des conditions de surcharge ;
   ▪ « BAD_INDEX » : ce code indique qu'une SFC visée par un message de diagnostic est inconnue ;
∘ Test_Packet_Result : si un paquet de test a été inclus dans une requête, le paquet de test est présenté en entrée de la fonction SF locale ; le résultat du traitement à la sortie de la fonction SF est enregistré dans cet attribut Test_Packet_Result.

Lorsqu'une fonction SF détecte une panne ou un problème suite à une opération de diagnostic, elle envoie un message de notification au PDP pour l'informer de la panne. Cette notification permet de réduire le temps d'indisponibilité du service. La notification consiste à envoyer au PDP un message DlAG_RES() de manière spontanée : autrement dit, un message DIAG_RES() est émis par la fonction SF sans qu'elle n'ait pour autant reçu de message DIAG_REQ() de la part du PDP.

Différentes Classes de Qualité Service, dites Classes de Service, peuvent être configurées dans un domaine IP. Chaque Classe de Service est identifiée par un marquage DSCP (Differentiated Services Code Point), ou en utilisant les bits « Traffic Class » d'un paquet MPLS si une commutation MPLS est utilisée, ou un autre identifiant caractéristique des messages caractéristiques du protocole réseau utilisé.

Le chemin de transfert du trafic entre deux fonctions SF, ou entre le PDP et une fonction SF, peut être différent d'une Classe de Service à une autre. De ce fait, le diagnostic d'une SFC « Chaîne_1 » au titre d'une Classe de Service CS1 ne permet aucunement de déduire que la SFC Chaîne_1 est fonctionnelle pour l'ensemble des Classes de Service actives. Le message de diagnostic DIAG_REQ() doit donc de préférence indiquer la Classe de Service concernée ; un exemple de réalisation est le marquage DSCP du message DIAG_REQ().

De préférence également, le diagnostic de fonction SF, d'une SFC, ou d'une séquence de fonctions SF au sein d'une SFC, doit être exécuté pour l'ensemble des Classes de Service configurées dans un domaine IP.

On va décrire à présent deux modes de réalisation du procédé selon l'invention.

Selon un premier mode de réalisation, dit « mode centralisé », c'est un PDP qui effectue les opérations de diagnostic pour tout ou partie des fonctions SF actives dans le domaine IP. Ce PDP peut notamment vérifier si :
- une fonction SF donnée est opérationnelle, c'est-à-dire si elle est non seulement joignable (c'est-à-dire accessible par une adresse IP) mais aussi si elle exécute correctement le service prévu ;
- un profil associé à une fonction SF donnée est opérationnel ;
- toutes ou certaines des SFC sont opérationnelles ;
- une séquence de fonctions SF au sein d'une SFC est opérationnelle ;
- les règles de classification sont fonctionnelles et cohérentes entre elles ; et
- la liste des fonctions SF invoquées au titre d'une SFC donnée correspond à ce qui a été configuré par l'entité administrative en charge de l'exploitation du domaine IP.

Le PDP peut effectuer diverses opérations de diagnostic, dont on va donner à présent des exemples caractéristiques.
1. Pour vérifier si une fonction SF donnée est opérationnelle, le PDP émet un message DIAG_REQ() comprenant les attributs suivants :
   - Service_Function_Identifier : cet attribut doit indiquer l'identifiant de la fonction SF ; comme expliqué ci-dessus, cet attribut est nécessaire en cas de co-localisation de plusieurs fonctions SF au sein d'un équipement joignable par la même adresse IP ;
   - Request_Identifier : cet attribut est obligatoire pour corréler une requête avec la réponse à cette requête ;
   - Request_Sequence_Number : cet attribut est utilisé pour distinguer les messages de diagnostic en cas de retransmission ;
   - Timestamp : cet attribut est utilisé pour inclure l'horodatage d'envoi de la requête ;
   - Test_Packet : paquet de test (optionnel), à inclure lorsque le PDP souhaite procéder à certaines vérifications.

   Par exemple pour le réseau de la figure 1, DIAG_REQ(SF1) désigne un message envoyé par le PDP pour le diagnostic de la fonction SF1.
2. Pour vérifier si les règles de classification correspondent aux objectifs de l'entité administrative en charge du réseau, le PDP émet un message DIAG_REQ() comprenant les attributs suivants :
   - Service_Function_Map_Index : cet attribut doit être valorisé à « 0 » ;
   - Service_Function_Identifier : cet attribut, si présent, doit indiquer l'identifiant de la fonction de classification ;
   - Request_Identifier : cet attribut est obligatoire pour corréler une requête avec la réponse à cette requête ;
   - Request_Sequence_Number : cet attribut est utilisé pour distinguer les messages de diagnostic en cas de retransmission ;
   - Timestamp : cet attribut est la copie de l'attribut « Timestamp » de la requête ; le PDP peut calculer le RTT (Round Trip Time) en déduisant cette valeur de Timestamp de celle correspondant à l'horodatage de réception du message DIAG_RES() ;
   - Recorded_Service_Function_Map : cet attribut contient une liste vide ;
   - Test_Packet : paquet de test utilisé pour récupérer le résultat de la classification appliquée à ce paquet ; en effet, le classificateur applique les règles de classification à ce paquet et retourne le résultat de classification dans une réponse DIAG_RES().
3. Pour vérifier si toutes les SFC auxquelles appartient une fonction SF donnée sont opérationnelles, le PDP émet un message DIAG_REQ() comprenant les attributs suivants :
   - Service_Function_Map_Index : cet attribut doit avoir la valeur « 0 » lorsque le PDP souhaite diagnostiquer l'ensemble des SFC ;
   - Service_Function_Identifier : cet attribut doit indiquer l'identifiant de la fonction SF ; cet attribut est nécessaire en cas de co-localisation de plusieurs fonctions SF au sein d'un équipement joignable par la même adresse IP ; si cet attribut n'est pas renseigné dans une requête destinée à un noeud SF associé à une seule fonction SF, alors ledit noeud SF considère que la requête lui est destinée ; le mode par défaut est d'inclure cet attribut ;
   - Request_Identifier : cet attribut est obligatoire pour corréler une requête avec la réponse à cette requête ;
   - Request_Sequence_Number : cet attribut est utilisé pour distinguer les messages de diagnostic en cas de retransmission ;
   - Timestamp : cet attribut est la copie de l'attribut Timestamp de la requête ; le PDP peut calculer le RTT en déduisant cette valeur de Timestamp de celle correspondant à l'horodatage de réception du message DIAG_RES() ;
   - Recorded_Service_Function_Map : cet attribut est optionnel ; la première requête de diagnostic contient une liste vide.

   Par exemple pour le réseau de la figure 1, DlAG_REQ(Service_Function_Map_Index=0, SF6) désigne un message envoyé par le PDP pour le diagnostic de toutes les SFC dans lesquelles intervient la fonction SF6.
4. Pour vérifier si un profil associé à une fonction SF donnée est opérationnel, le PDP émet un message DIAG_REQ() comprenant les attributs suivants :
   - Service_Function_Identifier : cet attribut doit indiquer l'identifiant de la fonction SF ; cet attribut est nécessaire en cas de co-localisation de plusieurs fonctions service au sein d'un équipement joignable par la même adresse IP ;
   - Service_Function_Profile_ID : cet attribut doit renseigner l'identifiant du profil en question ;
   - Request_Identifier : cet attribut est obligatoire pour corréler une requête avec la réponse à cette requête ;
   - Request_Sequence_Number : cet attribut est utilisé pour distinguer les messages de diagnostic en cas de retransmission ;
   - Timestamp : cet attribut est la copie de l'attribut Timestamp de la requête ; le PDP peut calculer le RTT en déduisant cette valeur de Timestamp de celle correspondant à l'horodatage de réception du message DIAG_RES().

   Par exemple pour le réseau de la figure 1, DIAG_REQ(SF6, Profile_1) désigne un message envoyé par le PDP pour le diagnostic du profil Profile_1 de la fonction SF6.
5. Pour vérifier si une séquence au sein d'une SFC est opérationnelle, le PDP émet un message DIAG_REQ() comprenant les attributs suivants :
   - Service_Function_Map_Index : cet attribut indique l'identifiant de la SFC concernée ; comme mentionné ci-dessus, la valeur « 0 » signifie que le PDP souhaite diagnostiquer toutes les SFC auxquelles appartient une fonction SF donnée ;
   - Service_Function_Identifier : cet attribut indique l'identifiant de la première fonction SF de la séquence ;
   - Tail_SF : cet attribut est optionnel ; si présent, il indique, dans une séquence, la dernière fonction SF concernée par une opération de diagnostic ; si cet attribut n'est pas renseigné, alors toutes les fonctions SF de la chaîne SFC suivant la fonction SF identifiée par Service_Function_Identifier doivent être diagnostiquées ;
   - Request_Identifier : cet attribut est obligatoire pour corréler une requête avec la réponse à cette requête ;
   - Request_Sequence_Number : cet attribut est utilisé pour distinguer les messages de diagnostic en cas de retransmission ;
   - Timestamp : cet attribut est la copie de l'attribut Timestamp de la requête ; le PDP calculera le RTT en déduisant cette valeur de Timestamp de celle correspondant à l'horodatage de réception du message DIAG_RES() ;
   - Recorded_Service_Function_Map : cet attribut est optionnel ; la première requête de diagnostic contient une liste vide.

   Par exemple pour le réseau de la figure 1, DIAG_REQ(Service_Function_Map_lndex=Chaîne_2, SF1) désigne un message envoyé par le PDP pour le diagnostic de la SFC Chaîne_2 (décrite ci-dessus), en commençant par la fonction SF1.
6. Pour vérifier si une SFC est opérationnelle, le PDP émet un message DIAG_REQ() comprenant les attributs suivants :
   - Service_Function_Map_Index : cet attribut indique l'identifiant de la SFC concernée ; comme mentionné ci-dessus, la valeur « 0 » signifie que le PDP souhaite diagnostiquer toutes les SFC auxquelles appartient une fonction SF donnée ;
   - Service_Function_Identifier : cet attribut, si présent, indique l'identifiant de la première fonction SF invoquée au titre de la SFC concernée ; on notera que cet attribut n'est pas nécessaire car cette information est redondante avec la présence de l'attribut Service_Function_Map_lndex ; cependant, la présence de cet attribut permet d'optimiser les traitements exécutés par un noeud SF hébergeant plusieurs fonctions SF ;
   - Request_Identifier : cet attribut est obligatoire pour corréler une requête avec la réponse à cette requête ;
   - Request_Sequence_Number : cet attribut est utilisé pour distinguer les messages de diagnostic en cas de retransmission ;
   - Timestamp : cet attribut est la copie de l'attribut Timestamp de la requête ; le PDP peut calculer le RTT en déduisant cette valeur de Timestamp de celle correspondant à l'horodatage de réception du message DIAG_RES() ;
   - Recorded_Service_Function_Map : cet attribut est optionnel ; la première requête de diagnostic contient une liste vide.

   Par exemple pour le réseau de la figure 1, DIAG_REQ(Service_Function Map_Index=Chaîne_1, SF1) désigne un message envoyé par le PDP pour le diagnostic de la SFC Chaîne_1 (décrite ci-dessus).
7. Pour vérifier si toutes les SFC sont opérationnelles, le PDP émet autant de messages qu'il y a de SFC.

Par exemple pour le réseau de la figure 1, les messages :
DIAG_REQ(Service_Function Map_Index=Chaîne_1, [SF1]),
DIAG_REQ(Service_Function_Map_lndex=Chaîne_2, [SF2]), et
DIAG_REQ(Service_Function_Map_Index=Chaîne_3, [SF3])
sont envoyés à des noeuds associés respectivement aux fonctions SF1, SF2 et SF3. La notation « [...] » indique que l'attribut est optionnel.

Le message DIAG_REQ() est envoyé avec comme adresse de destination l'adresse IP (Service_Function_Service_Locator) du noeud associé à la fonction SF, et comme adresse source l'adresse IP du PDP (PDP_Locator).

Si plusieurs adresses IP Service_Function_Service_Locator sont connues pour la même fonction SF, le PDP peut émettre plusieurs messages DIAG_REQ().Le PDP peut envoyer des messages DIAG_REQ() à toutes les adresses Service_Function_Service_Locator connues associées à une fonction SF, ou à seulement certaines de ces adresses.

Par exemple pour le réseau de la figure 1, le PDP peut envoyer deux messages DIAG_REQ() à destination respectivement des adresses IPv4 et IPv6 de la fonction SF3.

Le PDP peut contacter l'ensemble des adresses Service_Function_Service_Locator séquentiellement ou en parallèle.

Le PDP utilise une période de retransmission (« *retransmission timer* » en anglais) pour minimiser les risques de perte de requêtes de diagnostic. Si le PDP n'a pas reçu de réponse après expiration de la période de retransmission, le PDP réémet un autre message DIAG_REQ() dont les attributs sont identiques à ceux du premier message DIAG_REQ(), à l'exception de l'attribut Request_Sequence_Number qui indique une valeur différente. Pour les retransmissions successives, le PDP peut utiliser la même période de retransmission, ou une autre, par exemple une période de retransmission qui augmente de manière exponentielle à chaque retransmission.

Si l'adresse de destination du message DIAG_REQ() n'est pas joignable, le PDP reçoit un message d'erreur. La réception de ce message d'erreur indique que la fonction SF concernée n'est pas joignable à l'adresse identifiée par Service_Function_Service_Locator. Le PDP peut alors prendre des décisions appropriées, telles que mettre à jour les SFC de façon à retirer le Service_Function_Service_Locator concerné des tables de politiques et à faire basculer le trafic vers d'autres localisations (c'est-à-dire d'autres adresses Service_Function_Service_Locator) pour invoquer la même fonction SF.

Si la fonction SF identifiée par Service_Function_Identifier n'est pas associée au noeud destinataire du message, le PDP reçoit un message d'erreur. Le PDP doit alors vérifier la liste des adresses Service_Function_Service_Locator pour cette fonction SF. Le PDP peut aussi prendre des décisions appropriées, telles que mettre à jour les SFC de façon à retirer les adresses Service_Function_Service_Locator des tables de politiques, et à faire basculer le trafic vers d'autres localisations (c'est-à-dire d'autres adresses Service_Function_Service_Locator) pour invoquer la même fonction SF.

Si la fonction SF identifiée par Service_Function_Identifier est associée au noeud destinataire du message, mais que l'opération de diagnostic échoue (par exemple en raison de ressources insuffisantes au sein du noeud destinataire), le PDP reçoit un message d'erreur. Le PDP peut alors prendre des décisions appropriées, telles que mettre à jour les SFC de façon à retirer les adresses Service_Function_Service_Locator des tables de politiques et à faire basculer le trafic vers d'autres localisations (c'est-à-dire d'autres adresses Service_Function_Service_Locator) pour invoquer la même fonction SF.

Si la fonction identifiée par Service_Function_Identifier ne fait pas partie de la SFC identifiée par l'attribut Service_Function_Map_Index, le PDP reçoit un message d'erreur comprenant un code d'erreur « BAD_INDEX ». Le PDP peut alors corriger la valeur de l'attribut Service_Function_Map_Index, et émettre un nouveau message DIAG_REQ().

On va décrire à présent les opérations mises en oeuvre par un noeud du réseau, dit « noeud diagnostiqué », suite à la réception par ce noeud diagnostiqué d'un message DIAG_REQ() tel que décrit ci-dessus.
1. Si le message est destiné à un classificateur, celui-ci récupère le paquet de test et applique les règles de classification à ce paquet.
   - Si aucune erreur n'est signalée lors de l'opération de classification, le classificateur émet un message DIAG_RES() comprenant les attributs suivants :
      ∘ Service_Function_Map_Index : cet attribut indique la valeur de marquage résultant de la classification (c'est-à-dire, la SFC à invoquer pour ce paquet) ;
      ∘ Service_Function_Identifier : cet attribut doit indiquer l'identifiant de la fonction de classification ;
      ∘ Request_Identifier : ce champ est recopié à partir de la requête initiale ;
      ∘ Request_Sequence_Number : ce champ est recopié à partir de la requête initiale ;
      ∘ Timestamp : ce champ est recopié à partir de la requête initiale ;
      ∘ Recorded_Service_Function_Map : cet attribut contient l'identifiant du classificateur ;
      ∘ Test_Packet : ce champ est recopié à partir de la requête initiale ; cet attribut permet de corréler une requête avec la réponse à cette requête ; cet attribut est optionnel dans le cas où le PDP maintient un état pour chaque requête émise ;
      ∘ Test_Packet_Result : le classificateur applique les règles de classification à ce paquet et retourne le résultat de classification dans ce champ.
   - En cas d'erreur, le classificateur émet un message DIAG_RES() caractérisé de la manière suivante :
      ∘ les attributs de la requête DIAG_REQ() sont recopiés, sauf les attributs Service_Function_Identifier et Recorded_Service_Function_Map qui doivent inclure l'identifiant du classificateur ;
      ∘ attribut STATUS : la valeur « FAIL » indique que l'opération de diagnostic a échoué ;
      ∘ attribut Error_Code : le classificateur utilise le code d'erreur correspondant à l'erreur rencontrée lors du traitement du paquet de test.
   - Si la fonction SF identifiée par l'attribut Service_Function_Identifier n'est pas associée audit noeud diagnostiqué (joignable à l'adresse Service_Function_Service_Locator), le classificateur émet un message DIAG_RES() à destination de l'adresse source du message DIAG_REQ(). Ce message DIAG_RES() est caractérisé de la manière suivante :
      ∘ les attributs de la requête DIAG_REQ() sont recopiés, sauf les attributs Service_Function_Identifier et Recorded_Service_Function_Map qui doivent inclure l'identifiant du classificateur ;
      ∘ attribut STATUS : la valeur « FAIL » indique que l'opération de diagnostic a échoué ;
      ∘ attribut Error_Code: le code d'erreur « NOT _FOUND » est utilisé pour indiquer au noeud ayant envoyé le message DIAG_REQ() que la fonction SF identifiée par Service_Function_Identifier n'est pas associée audit noeud diagnostiqué.
2. Si la fonction SF identifiée par Service_Function_Identifier est bien associée audit noeud diagnostiqué, ce noeud diagnostiqué met en oeuvre les étapes suivantes :
   - Si l'attribut Service_Function_Map_Index n'est pas renseigné :
      ∘ Si l'attribut Service_Function_Profile_ID n'est pas renseigné, c'est une indication que le noeud diagnostiqué doit effectuer au moins une opération de diagnostic concernant la fonction SF identifiée par l'attribut Service_Function_Identifier ;
      ∘ Si l'attribut Service_Function_Profile_ID est renseigné, c'est une indication que le noeud diagnostiqué doit effectuer au moins une opération de diagnostic concernant la fonction SF identifiée par l'attribut Service_Function_Identifier, mais seulement pour le profil renseigné dans la requête ;
      ∘ Si les opérations de diagnostic sont réalisées avec succès, le noeud émet alors un message DIAG_RES() à destination du noeud diagnostiqueur. Ce message est caractérisé de la manière suivante :
         ▪ les attributs de la requête DIAG_REQ() sont recopiés , sauf les attributs Service_Function_Identifier et Recorded_Service_Function_Map qui doivent inclure l'identifiant de la fonction SF ;
         ▪ attribut STATUS : la valeur « SUCCESS » indique que l'opération de diagnostic a réussi.
      ∘ En cas d'erreur(s) observée(s) lors de l'opération de diagnostic de la fonction SF identifiée par l'attribut Service_Function_Identifier, le noeud diagnostiqué émet un message DIAG_RES() à destination du noeud diagnostiqueur. Ce message est caractérisé de la manière suivante :
         ▪ les attributs de la requête DIAG_REQ() sont recopiés , sauf les attributs Service_Function_Identifier et Recorded_Service_Function_Map qui doivent inclure l'identifiant de la fonction SF ;
         ▪ attribut STATUS : la valeur « FAIL » indique que l'opération de diagnostic a échoué ;
         ▪ attribut Error_Code : indique le code de l'erreur (par exemple NO_RESOURCES si toutes les ressources du noeud diagnostiqué sont déjà utilisées).
   - Si l'attribut Service_Function_Map_Index est renseigné :
      ∘ Si l'attribut Service_Function_Map_Index est valorisé à une valeur autre que « 0 », le noeud diagnostiqué vérifie si la fonction identifiée par l'attribut Service_Function_Identifier fait partie de la SFC identifiée par l'attribut Service_Function_Map_lndex.
         ▪ Si la fonction SF identifiée par l'attribut Service_Function_Identifier fait bien partie de la SFC identifiée par l'attribut Service_Function_Map_lndex, le noeud diagnostiqué effectue les opérations de diagnostic pour cette fonction SF. Si les opérations de diagnostic sont réalisées avec succès, le noeud diagnostiqué vérifie s'il est le dernier élément de la SFC identifiée par l'attribut Service_Function_Map_Index, et si son identifiant Service_Function_Identifier est indiqué dans l'attribut Tail_SF (lorsque cet attribut est renseigné dans la requête DIAG_REQ()).
            Si ce n'est pas le cas, le noeud diagnostiqué émet un message DIAG_REQ() vers un noeud associé à la prochaine fonction SF de la séquence ou de la SFC, conformément à l'attribut Service_Function_Map_lndex. L'adresse source de ce nouveau message est l'adresse IP du noeud associé à la fonction SF identifiée par l'attribut Service-Function-Identifier. L'adresse de destination de ce nouveau message est l'adresse IP du noeud associé à la prochaine fonction SF telle qu'identifiée dans la liste correspondant à l'attribut Service_Function_Map_lndex. Si plusieurs adresses Service_Function_Service_ Locator sont connues et peuvent être utilisées pour atteindre le noeud associé à la prochaine fonction SF de la liste identifiée par l'attribut Service_Function_Map_lndex, le noeud diagnostiqué émet plusieurs messages DIAG_REQ().Ces messages DIAG_REQ() peuvent être envoyés à toutes les adresses Service_Function_Service_Locator connues pour la prochaine fonction SF, ou seulement à certaines de ces adresses. Par exemple pour le réseau de la figure 1, lorsque le noeud diagnostiqué reçoit un message DIAG_REQ(Service_Function Map_Index=
            Chaîne_1, SF1), ce noeud prend connaissance de deux adresses Service_Function_Service_Locator permettant de joindre un noeud associé à la fonction SF3. De préférence, le nouveau message DIAG_REQ() encapsule le message DIAG_REQ() d'origine. Les attributs de ce nouveau message sont :
            - Service_Function_Map_Index : cet attribut est recopié du message DIAG_REQ() d'origine ;
            - Service_Function_Identifier : il s'agit de l'identifiant de la prochaine fonction SF de la SFC, telle qu'indiquée par l'attribut Service_Function_Map_Index ;
            - Si un attribut Recorded_Service_Function_Map est présent dans la requête d'origine, le noeud diagnostiqué met à jour l'attribut Recorded_Service_Function_Map avec l'identifiant de la fonction SF courante (c'est-à-dire, ajoute l'identifiant de la fonction SF courante à la liste décrite par l'attribut Recorded_Service_Function_Map), et l'insère dans le message DIAG_REQ() à envoyer vers un noeud associé à la prochaine fonction SF de la SFC.

            Par exemple pour le réseau de la figure 1, lorsqu'un noeud associé à la fonction SF1 reçoit un message DIAG_REQ(Service_Function Map_Index= Chaîne_2, SF1), ce noeud émet un message DIAG_REQ(Service_Function_Map_ Index=Chaîne_1, SF6) vers SF6.
            Si, en revanche, le noeud diagnostiqué est associé à la dernière fonction SF de la SFC identifiée par l'attribut Service_Function_Map_Index ou à la dernière fonction SF de la séquence (conformément à la valeur de l'attribut Tail_SF), le noeud diagnostiqué envoie un message DIAG_RES(), soit à l'adresse source du message DIAG_REQ() encapsulé dans le dernier message DIAG_REQ() s'il y a encapsulation, soit à l'adresse source du dernier message DIAG_REQ().Par exemple pour le réseau de la figure 1, le noeud associé à la fonction SF6 émet un message DIAG_RES() lorsqu'il reçoit un message DIAG_REQ(Service_Function Map_Index= Chaîne_2, SF6).
            Si toutes les opérations de diagnostic ont été réalisées avec succès, ce message DIAG_RES() est caractérisé de la manière suivante :
            - les attributs de la requête DIAG_REQ() sont recopiés , sauf l'attribut Service_Function_Identifier qui doit renseigner l'identifiant de la dernière fonction SF diagnostiquée et l'attribut Recorded_Service_Function_Map qui doit être mis à jour comme défini précédemment ;
            - attribut STATUS : valorisé à « SUCCESS ».
         ▪ Si la fonction identifiée par l'attribut Service_Function_Identifier ne fait pas partie de la SFC identifiée par l'attribut Service_Function_Map_Index, le noeud diagnostiqué émet un message DlAG_RES() à destination du noeud diagnostiqueur. Ce message DIAG_RES() est caractérisé de la manière suivante :
            - les attributs de la requête DIAG_REQ() sont recopiés ;
            - attribut STATUS : la valeur « FAIL » indique que l'opération de diagnostic a échoué ;
            - attribut Error_Code : indique un code d'erreur « BAD_INDEX ».
      ∘ Si l'attribut Service_Function_Map_lndex est valorisé à « 0 », cela signifie que le noeud diagnostiqué doit effectuer une opération de diagnostic pour l'ensemble des SFC auxquelles appartient la fonction SF identifiée par l'attribut Service_Function_Identifier. Si les opérations de diagnostic sont réalisées avec succès, le noeud émet alors des messages DIAG_REQ() vers la, ou les, prochaine(s) fonction(s) SF de toutes les SFC qui comportent la fonction SF identifiée par l'attribut Service_Function_Identifier. L'adresse source de chaque nouveau message est l'adresse IP du noeud diagnostiqué. L'adresse de destination de ce nouveau message est l'adresse IP d'un noeud associé à la prochaine fonction SF de la liste identifiée par l'attribut Service_Function_Map_lndex, pour chaque liste à laquelle appartient la fonction SF identifiée par l'attribut Service_Function_Identifier. Si plusieurs adresses Service_Function_Service_Locator peuvent être utilisées pour atteindre un noeud associé à la prochaine fonction SF de la liste identifiée par l'attribut Service_Function_Map_Index, le noeud diagnostiqué émet plusieurs messages DIAG_REQ().Le noeud diagnostiqué peut envoyer des messages DIAG_REQ() à toutes les adresses connues d'un noeud associé à la prochaine fonction SF, ou à seulement certaines de ces adresses. De préférence, chaque nouveau message encapsule le message DIAG_REQ() d'origine. Les attributs de ce nouveau message DIAG_REQ() sont :
         ▪ Service_Function_Map_Index : déduit localement à partir d'une table de chaînes de fonctions SF ;
         ▪ Service_Function_Identifier : identifiant de la prochaine SF dans la SFC identifiée par l'attribut Service_Function_Map_Index ;
         ▪ Si un attribut Recorded_Service_Function_Map est présent dans la requête d'origine, la fonction SF courante met à jour l'attribut Recorded_Service_Function_Map avec l'identifiant de la fonction SF courante (c'est-à-dire, ajoute l'identifiant de la fonction SF courante à la liste contenue dans Recorded_Service_Function_Map), et l'insère dans le message DIAG_REQ() émis vers un noeud associé à la prochaine fonction SF de la SFC.

         Par exemple pour le réseau de la figure 1, lorsqu'un noeud associé à la fonction SF1 reçoit un message DIAG_REQ(Service_Function_Map_Index=0, SF1), ce noeud émet un message DIAG_REQ() vers un noeud associé à la fonction SF3 (au titre de la SFC Chaîne_1) et vers un noeud associé à la fonction SF6 (au titre de la SFC Chaîne_2).
         Si la fonction SF identifiée par l'attribut Service_Function_Identifier est le dernier élément de la SFC, un message DIAG_RES() est envoyé, soit à l'adresse source du message DIAG_REQ() encapsulé dans le dernier message DIAG_REQ() en cas d'encapsulation, soit à l'adresse source du dernier message DIAG_REQ().Par exemple pour le réseau de la figure 1, lorsqu'un noeud associé à la fonction SF6 reçoit un message DIAG_REQ(Service_Function_Map_lndex=Chaîne_2, SF6) de la part du noeud ayant émis la requête d'origine, le noeud associé à la fonction SF6 émet un message DIAG_RES() vers le noeud ayant émis la requête d'origine.
      ∘ Si une erreur a été détectée lors du diagnostic, le noeud diagnostiqué émet un message DlAG_RES() à destination, soit du noeud ayant envoyé le dernier message DIAG_REQ(), soit du noeud ayant émis la requête d'origine (c'est-à-dire, en cas d'encapsulation, à l'adresse source du message DIAG_REQ() encapsulé dans le dernier message DIAG_REQ()). Ce message DIAG_RES() est caractérisé de la manière suivante :
         ▪ les attributs de la requête DIAG_REQ() sont recopiés, sauf l'attribut Service_Function_Identifier qui doit renseigner l'identifiant de la dernière fonction SF diagnostiquée et l'attribut Recorded_Service_Function_Map qui doit être mis à jour comme défini précédemment ;
         ▪ attribut STATUS : la valeur « FAIL » indique que l'opération de diagnostic a échoué ;
         ▪ attribue Error_Code : indique le code de l'erreur (par exemple, « NO_RESOURCES » si toutes les ressources du noeud diagnostiqué sont déjà utilisées).

De façon optionnelle, un noeud associé à une fonction SF intermédiaire ayant traité avec succès un message DIAG_REQ() reçu de la part d'un noeud associé à la fonction précédente, telle qu'indiquée dans la carte caractéristique de la SFC à laquelle ces fonctions SF appartiennent, peut envoyer un message DIAG_RES() à ce noeud associé à la fonction précédente, afin de lui notifier explicitement que la requête a été traitée avec succès. Lors d'une procédure de retransmission, les fonctions SF intermédiaires d'une SFC peuvent aussi gérer la retransmission si cette procédure de notification explicite est activée.

Selon un deuxième mode de réalisation de l'invention, dit « mode SF », c'est une fonction SF, dite fonction SF « locale », qui gère les opérations de diagnostic. Ces opérations de diagnostic sont analogues à celles mises en oeuvre par le PDP, et que l'on vient de décrire ; par souci de brièveté, on ne les répétera donc pas ci-dessous.

Une fonction de service locale peut notamment vérifier si :
- une autre fonction SF donnée est opérationnelle ;
- un profil associé à une fonction SF donnée est opérationnel ; et
- une SFC, ou une séquence de fonctions SF au sein d'une SFC, est opérationnelle.

Une fonction SF locale peut vérifier si ses voisines au sein d'une SFC donnée sont opérationnelles. Lorsqu'une fonction SF locale utilise plusieurs attributs Service_Function_Service_Locator pour contacter une autre fonction SF appartenant à une SFC donnée, ladite fonction SF locale peut effectuer des opérations de diagnostic pour déterminer quels attributs Service_Function_Service_Locator utiliser pour contacter ladite fonction SF. Le message de diagnostic est alors envoyé à toutes ou seulement certaines des adresses IP correspondant aux attributs Service_Function_Service_Locator associés à cette autre fonction SF.

Par exemple pour le réseau de la figure 1, la fonction SF1 peut effectuer des opérations de diagnostic :
- - concernant SF3, en émettant le message
   DIAG_REQ(Service_Function Map_Index=Chaîne_1, SF3)
   au titre de la SFC Chaîne_1, et
concernant SF6, en émettant le message
   DIAG_REQ(Service_Function_Map_Index=Chaîne 2, SF6)
   au titre de la SFC Chaîne_2.

Si SF6 est joignable à deux adresses IP différentes, le résultat du diagnostic utilisant le message

DIAG_REQ(Service_Function_Map_Index=Chaîne_2, SF6)
peut être choisi comme critère pour décider de quelle adresse IP il faut utiliser pour transférer le trafic vers SF6 au titre de la SFC Chaîne_2.

Comme autre exemple concernant le réseau de la figure 1, la fonction SF3 peut effectuer des opérations de diagnostic concernant SF6 au moyen du message

DIAG_REQ(Service_Function_Map_Index=Chaîne_3, SF6).

Selon un troisième mode de réalisation de l'invention, la requête de diagnostic DIAG_REQ() vise une liste ordonnée de fonctions SF, sans que les fonctions SF de cette liste ne forment ni une séquence, ni un ensemble complet, de fonctions SF d'une SFC installée dans le domaine IP.

On utilise alors un attribut appelé « Service_Function_List », qui indique une liste ordonnée (appelée Liste(Service_Function_ldentifier)) d'identifiants de fonctions SF ou une liste ordonnée (appelée Liste(Service_Function_Locator)) d'adresses IP de noeuds SF. Si l'attribut Service_Function_List est renseigné dans une requête de diagnostic DIAG_REQ(), alors l'attribut Service_Function_Map_Index ne doit pas être indiqué dans la même requête. La requête de diagnostic DIAG_REQ() incluant l'attribut Service_Function_List doit être envoyée à la fonction SF correspondant au premier identifiant (respectivement, à la première adresse IP) renseigné(e) dans la liste Service_Function_List.

Si l'opération de diagnostic a été réalisée avec succès, la requête de diagnostic DIAG_REQ() est alors envoyée au noeud SF associé à la prochaine fonction SF de la liste Service_Function_List. Cette procédure est réitérée jusqu'au dernier élément de la liste Liste(Service_Function_Identifier) (respectivement, de la liste Liste(Service_Function_Locator)).

L'utilisation d'une liste d'identifiants de fonctions SF suppose que les fonctions SF peuvent récupérer l'attribut Service_Function_Locator correspondant à une certaine fonction SF identifiée par un attribut Service_Function_Identifier. L'information peut être disponible localement auprès de chaque noeud SF (autrement dit, la liste des attributs Service_Function_Locator a été pré-configurée) ; en variante, chaque noeud SF peut invoquer un service de résolution dédié (par exemple le service DNS) pour déterminer l'attribut Service_Function_Locator correspondant à un attribut Service_Function_Identifier.

Un premier exemple illustrant ce troisième mode de réalisation est associé au message DIAG_REQ(Service_Function_List(SF1, SF2, SF5)). Le PDP envoie cette requête de diagnostic à un noeud associé à la fonction SF1. Ce noeud vérifie si son identifiant est présent dans la liste, et récupère ensuite l'identifiant du prochain « saut », c'est-à-dire l'identifiant permettant d'atteindre le prochain noeud SF : dans cet exemple, ce noeud doit transférer la requête de diagnostic vers un noeud associé à SF2. Une fois la requête reçue par le noeud associé à SF2, ce noeud vérifie la présence de son identifiant dans la liste Service_Function_List, et récupère aussi l'identifiant de la fonction SF suivante dans la liste, c'est-à-dire SF5. Ensuite, un noeud associé à SF5 reçoit la requête de diagnostic, en déduit qu'il est le dernier noeud SF de la liste, et envoie un message de réponse au PDP.

Un deuxième exemple illustrant ce troisième mode de réalisation est associé au message DIAG_REQ(Service_Function_List(« 1.2.3.4 », « 2.3.4.5 », « 3.4.5.6 »)). Le PDP envoie cette requête de diagnostic à un noeud SF dont l'adresse est «1.2.3.4». Ce noeud SF vérifie si l'un de ses attributs Service_Function_Locator est présent dans la liste, et récupère ensuite l'attribut Service_Function_Locator correspondant au prochain «saut» : dans cet exemple, ce noeud SF doit transmettre la requête de diagnostic à l'adresse « 2.3.4.5 ». Une fois la requête reçue par le noeud SF ayant comme attribut Service_Function_Locator l'adresse « 2.3.4.5 », ce noeud vérifie la présence d'un de ses attributs Service_Function_Locator dans la liste Service_Function_List, et récupère aussi l'adresse IP pour atteindre le prochain noeud SF, c'est-à-dire le noeud ayant comme attribut Service_Function_Locator l'adresse « 3.4.5.6 ». Ensuite, ce noeud reçoit la requête de diagnostic, en déduit qu'il est le dernier de la liste, et envoie un message de réponse au PDP.

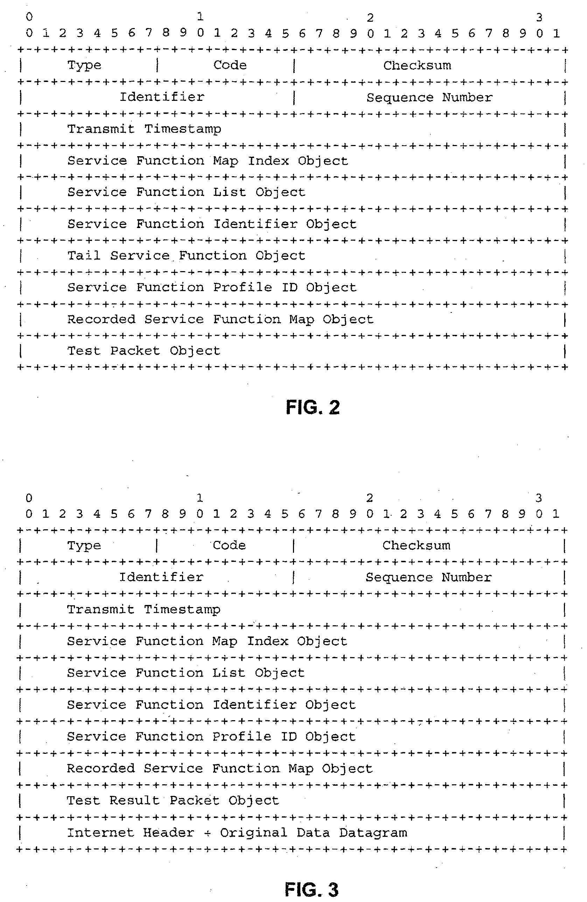

On va décrire à présent un exemple de réalisation de l'invention, dans lequel on utilise les ressources du protocole ICMP. A ce titre, deux nouveaux messages ICMP sont définis :
- ICMP SF Diag Request : ce message est un exemple de réalisation du message DIAG_REQ() défini ci-dessus ; le format de ce message est illustré sur la **figure 2** ; et
- ICMP SF Diag Response : ce message est un exemple de réalisation du message DIAG_RES() défini ci-dessus ; le format de ce message est illustré sur la **figure 3****.**

Les figures 2 et 3 montrent des objets pouvant être utilisés par ces messages ICMP. Ces objets respectent un format conforme au document RFC 4884 de l'IETF, qui est illustré sur la **figure 4****.**

Les champs du message ICMP SF Diag Request illustrés sur la figure 2 sont les suivants :
- Type, Code, Checksum, Identifier et Sequence_Number sont décrits dans le document RFC 792 de l'IETF ;
- Transmit_Timestamp : cet objet indique le Timestamp (horodatage) d'envoi de la requête ;
- Service_Function_Map_Index : cet objet renseigne l'identifiant de la SFC ; cet attribut est optionnel ;
- Service_Function_List : cet objet renseigne une liste ordonnée de fonctions SF ; cet attribut est optionnel ;
- Service_Function_Identifier : cet objet renseigne l'identifiant de la fonction SF ; cet attribut est optionnel ;
- Tail Service Function : cet objet renseigne l'identifiant de la dernière fonction SF concernée par une opération de diagnostic ; cet attribut est optionnel ;
- Service_Function_Profile_ID : cet objet renseigne l'identifiant d'un profil de configuration d'une fonction SF ; cet attribut est optionnel ; le message de diagnostic peut contenir plusieurs identifiants de profil ;
- Test_Packet : cet objet est optionnel ; il est utilisé pour inclure un paquet de test pour vérifier les règles de classification, corréler les règles de classification avec les décisions de transfert du trafic, ou effectuer d'autres opérations de diagnostic que celles mises en oeuvre localement par les fonctions SF ; et
- Recorded_Service_Function_Map : cet objet est optionnel ; cet attribut renseigne la liste ordonnée des identifiants des fonctions SF traversées par un message de diagnostic.

Les champs du message ICMP SF Diag Response illustrés par la figure 3 sont les suivants :
- Type, Code, Checksum, Identifier et Sequence_Number sont décrits dans le document RFC 792 précité ;
- Transmit_Timestamp : cet objet indique le Timestamp d'envoi de la requête ;
- Service_Function_Map_Index : cet objet renseigne l'identifiant de la SFC ; cet attribut est optionnel ;
- Service_Function_List : cet objet renseigne une liste ordonnée de fonctions SF ; cet attribut est optionnel ;
- Service_Function_Identifier : cet objet renseigne l'identifiant de la fonction service ; cet attribut est optionnel ;
- Service_Function_Profile_ID : cet objet renseigne l'identifiant d'un profil de configuration d'une fonction SF; cet attribut est optionnel ; si cet attribut est renseigné, le message de diagnostic doit aussi inclure l'attribut Service_Function_Identifier ; le message de diagnostic peut contenir plusieurs identifiants de profil ;
- Recorded_Service_Function_Map : cet objet est optionnel ; cet attribut renseigne la liste ordonnée des identifiants des fonctions SF traversées par un message de diagnostic ;
- Test_Result_Packet : cet objet est optionnel ; il inclut le résultat de l'exécution de la fonction SF sur le paquet de test; et
- Internet Header + Original Data Datagram : cet objet inclut le message ICMP SF Diag Request d'origine, y compris l'en-tête IP.

On notera pour terminer que l'invention peut être mise en oeuvre au sein de noeuds PDP et de noeuds SF d'un domaine IP au moyen de composants logiciels et/ou matériels.

Les composants logiciels pourront être intégrés à un programme d'ordinateur classique de gestion d'un noeud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en oeuvre de l'un quelconque des procédés de diagnostic de fonctions service selon l'invention.

En effet, l'invention vise aussi un programme d'ordinateur téléchargeable depuis un réseau de communication comprenant des instructions pour l'exécution des étapes d'un procédé de diagnostic de fonctions service selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations, inamovible, ou partiellement ou totalement amovible, lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comprendre un moyen de stockage, tel qu'une ROM, par exemple un CD ROM ou une ROM de circuit microélectronique, ou un moyen d'enregistrement magnétique tel qu'un disque dur, ou encore une clé USB (« *USB flash drive* » en anglais).

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme est incorporé, le circuit étant adapté pour exécuter ou pour être utilisé dans l'exécution de l'un quelconque des procédés de diagnostic de fonctions service selon l'invention.

## Revendications

1. Procédé de diagnostic de fonctions service, dans un domaine IP comprenant au moins un noeud, dit noeud PDP, responsable de la prise de décisions relatives à la structuration d'une chaîne de fonctions service reposant sur un ensemble de fonctions service, dites fonctions SF, et de la notification de ces décisions à d'autres noeuds dudit domaine IP, et au moins un noeud, dit noeud SF, associé à au moins une fonction SF hébergée sur ledit noeud SF ou accessible *via* ledit noeud SF, ledit procédé étant **caractérisé en ce qu'**il comprend les étapes suivantes :
- un noeud, dit noeud diagnostiqueur, envoie une requête (DIAG_REQ) à un noeud SF, dit noeud diagnostiqué, concernant une fonction SF, dite fonction diagnostiquée, qui est identifiée dans la requête (DIAG_REQ) et/ou qui est la seule fonction SF associée audit noeud diagnostiqué,
- le noeud diagnostiqué réalise au moins une opération de diagnostic concernant ladite fonction diagnostiquée, et
- le noeud diagnostiqué envoie une réponse (DIAG_RES) audit noeud diagnostiqueur, ladite réponse (DIAG_RES) comprenant au moins l'indication du succès ou de l'échec de l'opération de diagnostic, ou du non-fonctionnement, ou du dysfonctionnement, de la fonction diagnostiquée.

2. Procédé de diagnostic de fonctions service, dans un domaine IP comprenant au moins un noeud, dit noeud PDP, responsable de la prise de décisions relatives à la structuration d'une chaîne de fonctions service reposant sur un ensemble de fonctions service, dites fonctions SF, et de la notification de ces décisions à d'autres noeuds dudit domaine IP, et au moins un noeud, dit noeud SF, associé à au moins une fonction SF hébergée sur ledit noeud SF ou accessible *via* ledit noeud SF, ledit procédé étant **caractérisé en ce qu'**il comprend une étape au cours de laquelle un noeud du réseau, dit noeud diagnostiqueur, envoie une requête de diagnostic (DIAG_REQ) comprenant au moins un identifiant (Service_Function_List), dit identifiant de liste, d'une liste ordonnée d'identifiants de fonctions SF ou d'adresses IP de noeuds SF,
et **en ce qu'**il comprend en outre les étapes itératives suivantes :
- un noeud, dit noeud diagnostiqué, associé à une fonction SF, dite fonction diagnostiquée, faisant partie de ladite liste ordonnée, reçoit une requête (DIAG_REQ) comprenant au moins ledit identifiant de liste (Service_Function_List),
- le noeud diagnostiqué effectue au moins une opération de diagnostic concernant ladite fonction diagnostiquée, et
- si ladite opération de diagnostic est réalisée avec succès, le noeud diagnostiqué envoie une requête (DIAG_REQ) comprenant au moins ledit identifiant de liste (Service_Function_List) à un noeud SF associé à la fonction SF qui fait suite, dans ladite liste ordonnée, à la fonction diagnostiquée,
et **en ce que** :
- si une opération de diagnostic échoue, ou montre que la fonction SF diagnostiquée n'est pas opérationnelle, le noeud diagnostiqué émet une réponse (DIAG_RES) comprenant au moins l'indication de l'échec de l'opération de diagnostic, ou du non-fonctionnement, ou du dysfonctionnement, de la fonction diagnostiquée, ou
- si en revanche toutes les opérations de diagnostic ont été réalisées avec succès, le noeud diagnostiqué associé à la dernière fonction SF de la liste ordonnée émet une réponse (DIAG_RES) comprenant au moins un résultat de succès du diagnostic.

3. Procédé de diagnostic de fonctions service, dans un domaine IP comprenant au moins un noeud, dit noeud PDP, responsable de la prise de décisions relatives à la structuration d'une chaîne de fonctions service reposant sur un ensemble de fonctions service, dites fonctions SF, et de la notification de ces décisions à d'autres noeuds dudit domaine IP, et au moins un noeud, dit noeud SF, associé à au moins une fonction SF hébergée sur ledit noeud SF ou accessible *via* ledit noeud SF, ledit procédé étant **caractérisé en ce qu'**il comprend une étape au cours de laquelle un noeud du réseau, dit noeud diagnostiqueur, envoie une requête de diagnostic (DIAG_REQ) comprenant au moins un identifiant (Service_Function Map_Index) d'une chaîne de fonctions SF, notée SFC, ainsi que, optionnellement, un identifiant (Tail_SF), dit identifiant de fin de séquence, d'une fonction SF terminant une séquence incluse dans ladite SFC,
et **en ce qu'**il comprend en outre les étapes itératives suivantes :
- un noeud, dit noeud diagnostiqué, associé à une fonction SF, dite fonction diagnostiquée, faisant partie de ladite SFC ou, le cas échéant, de ladite séquence, reçoit une requête (DIAG_REQ) comprenant au moins ledit identifiant (Service_Function_Map_lndex) de la SFC et, le cas échéant, ledit identifiant (TAIL_SF) de fin de séquence,
- le noeud diagnostiqué effectue au moins une opération de diagnostic concernant ladite fonction diagnostiquée, et
- si ladite opération de diagnostic est réalisée avec succès, le noeud diagnostiqué envoie une requête (DIAG_REQ) comprenant au moins l'identifiant (Service_Function_Map_lndex) de la SFC et, le cas échéant, l'identifiant (Tail_SF) de fin de séquence, à un noeud SF associé à la fonction SF qui fait suite, dans la SFC, à la fonction diagnostiquée,
et **en ce que** :
- si une opération de diagnostic échoue, ou montre que la fonction SF diagnostiquée n'est pas opérationnelle, le noeud diagnostiqué émet une réponse (DIAG_RES) comprenant au moins l'indication de l'échec de l'opération de diagnostic, ou du non-fonctionnement, ou du dysfonctionnement, de la fonction diagnostiquée, ou
- si en revanche toutes les opérations de diagnostic ont été réalisées avec succès, le noeud diagnostiqué associé à la dernière fonction SF de la SFC ou, le cas échéant, à la fonction SF identifiée par l'identifiant (TAIL_SF) de fin de séquence, émet une réponse (DIAG_RES) comprenant au moins un résultat de succès du diagnostic.

4. Procédé de diagnostic selon l'une quelconque des revendications 1 à 3, **caractérisé en ce que** ledit noeud diagnostiqueur est un noeud PDP.

5. Procédé de diagnostic selon l'une quelconque des revendications 1 à 3, **caractérisé en ce que** ledit noeud diagnostiqueur est un noeud SF.

6. Noeud, dit noeud diagnostiqueur, dans un domaine IP comprenant au moins un noeud, dit noeud PDP, responsable de la prise de décisions relatives à la structuration d'une chaîne de fonctions service reposant sur un ensemble de fonctions service, dites fonctions SF, et de la notification de ces décisions à d'autres noeuds dudit domaine IP, et au moins un noeud, dit noeud SF, associé à au moins une fonction SF hébergée sur ledit noeud SF ou accessible *via* ledit noeud SF, ledit noeud diagnostiqueur étant **caractérisé en ce qu'**il possède des moyens pour :
- envoyer une requête de diagnostic (DIAG_REQ) à un noeud SF, dit premier noeud diagnostiqué, associé à une fonction SF, dite première fonction diagnostiquée, et
- recevoir une réponse (DIAG_RES) de la part d'un noeud SF, dit dernier noeud diagnostiqué, associé à une fonction SF, dite dernière fonction diagnostiquée, ladite réponse (DIAG_RES) comprenant au moins l'indication du succès ou de l'échec de l'opération de diagnostic, ou du non-fonctionnement, ou du dysfonctionnement, de ladite dernière fonction diagnostiquée.

7. Noeud diagnostiqueur selon la revendication 6, **caractérisé en ce que** :
- lesdits premier et dernier noeuds diagnostiqués sont identiques,
- lesdites première et dernière fonctions diagnostiquées sont identiques, et
- la fonction SF diagnostiquée est identifiée dans la requête (DIAG_REQ) et/ou est la seule fonction SF associée au noeud diagnostiqué.

8. Noeud diagnostiqueur selon la revendication 6, **caractérisé en ce que** :
- ladite requête de diagnostic (DIAG_REQ) comprend au moins un identifiant (Service_Function_List), dit identifiant de liste, d'une liste ordonnée d'identifiants de fonctions SF ou d'adresses IP de noeuds SF, et
- lesdites première et dernière fonctions diagnostiquées font partie de ladite liste ordonnée.

9. Noeud diagnostiqueur selon la revendication 6, **caractérisé en ce que** :
- ladite requête de diagnostic (DIAG_REQ) comprend au moins un identifiant (Service_Function Map_Index) d'une chaîne de fonctions SF, notée SFC, ainsi que, optionnellement, un identifiant (Tail_SF), dit identifiant de fin de séquence, d'une fonction SF terminant une séquence incluse dans ladite SFC, et
- lesdites première et dernière fonctions diagnostiquées font partie de ladite SFC et, le cas échéant, de ladite séquence.

10. Noeud diagnostiqueur selon l'une quelconque des revendications 6 à 9, **caractérisé en ce que** ledit noeud diagnostiqueur est un noeud PDP.

11. Noeud diagnostiqueur selon l'une quelconque des revendications 6 à 9, **caractérisé en ce que** ledit noeud diagnostiqueur est un noeud SF.

12. Noeud, dit noeud diagnostiqué, dans un domaine IP comprenant au moins un noeud, dit noeud PDP, responsable de la prise de décisions relatives à la structuration d'une chaîne de fonctions service reposant sur un ensemble de fonctions service, dites fonctions SF, et de la notification de ces décisions à d'autres noeuds dudit domaine IP, et au moins un noeud, dit noeud SF, associé à au moins une fonction SF hébergée sur ledit noeud SF ou accessible *via* ledit noeud SF, ledit noeud diagnostiqué étant un noeud SF **caractérisé en ce qu'**il possède des moyens pour :
- recevoir de la part d'un noeud du domaine IP une requête de diagnostic (DIAG_REQ) concernant une fonction SF, dite fonction diagnostiquée, associée audit noeud diagnostiqué, et
- réaliser au moins une opération de diagnostic concernant ladite fonction diagnostiquée.

13. Noeud diagnostiqué selon la revendication 12, **caractérisé en ce qu'**il possède en outre des moyens pour émettre une réponse (DIAG_RES) comprenant au moins l'indication du succès ou de l'échec de l'opération de diagnostic, ou du non-fonctionnement, ou du dysfonctionnement, de ladite fonction SF diagnostiquée.

14. Noeud diagnostiqué selon la revendication 12, **caractérisé en ce qu'**il possède en outre des moyens pour transmettre ladite requête de diagnostic (DIAG_REQ) à un autre noeud SF associé à une fonction SF visée dans la requête de diagnostic (DIAG_REQ).

15. Système de diagnostic de fonctions service dans un domaine IP, **caractérisé en ce qu'**il comprend au moins un noeud diagnostiqueur selon l'une quelconque des revendications 6 à 11, et au moins un noeud diagnostiqué selon l'une quelconque des revendications 12 à 14.

16. Moyen de stockage de données inamovible, ou partiellement ou totalement amovible, comportant des instructions de code de programme informatique pour l'exécution des étapes d'un procédé de diagnostic de fonctions service selon l'une quelconque des revendications 1 à 5 mises en oeuvre par un noeud diagnostiqueur, ou pour l'exécution des étapes d'un procédé de diagnostic de fonctions service selon l'une quelconque des revendications 1 à 3 mises en oeuvre par un noeud diagnostiqué.

17. Programme d'ordinateur téléchargeable depuis un réseau de communication et/ou stocké sur un support lisible par ordinateur et/ou exécutable par un microprocesseur, **caractérisé en ce qu'**il comprend des instructions pour l'exécution des étapes d'un procédé de diagnostic de fonctions service selon l'une quelconque des revendications 1 à 5 mises en oeuvre par un noeud diagnostiqueur lorsque ces étapes sont exécutées sur un ordinateur, ou pour l'exécution des étapes d'un procédé de diagnostic de fonctions service selon l'une quelconque des revendications 1 à 3 mises en oeuvre par un noeud diagnostiqué lorsque ces étapes sont exécutées sur un ordinateur.

## Patentansprüche

1. Verfahren zur Diagnose von Dienstfunktionen in einer IP-Domain, umfassend mindestens einen Knoten, der PDP-Knoten genannt wird, der für das Treffen von Entscheidungen über die Strukturierung einer Dienstfunktionskette auf der Basis eines Satzes von Dienstfunktionen, die SF-Funktionen genannt werden, und für das Mitteilen dieser Entscheidungen an andere Knoten der IP-Domain verantwortlich ist, und mindestens einen Knoten, der SF-Knoten genannt wird, der mindestens einer SF-Funktion zugeordnet wird, die auf dem SF-Knoten gehostet wird oder über den SF-Knoten zugänglich ist, wobei das Verfahren **dadurch gekennzeichnet ist, dass** es die folgenden Schritte aufweist:
- ein Knoten, der diagnostizierender Konten genannt wird, sendet eine Anfrage (DIAG_REQ) an einen SF-Knoten, der diagnostizierter Knoten genannt wird, die eine SF-Funktion betrifft, die diagnostizierte Funktion genannt wird, die in der Anfrage (DIAG_REQ) identifiziert wird und/oder die einzige SF-Funktion ist, die dem diagnostizierten Knoten zugeordnet wird,
- der diagnostizierte Knoten führt mindestens einen Diagnosevorgang durch, der die diagnostizierte Funktion betrifft, und
- der diagnostizierte Knoten sendet eine Antwort (DIAG_RES) an den diagnostizierenden Konten, wobei die Antwort (DIAG_RES) mindestens die Angabe des Erfolgs oder des Misserfolgs des Diagnosevorgangs oder des Nichtfunktionierens oder der Fehlfunktion der diagnostizierten Funktion aufweist.

2. Verfahren zur Diagnose von Dienstfunktionen in einer IP-Domain, umfassend mindestens einen Knoten, der PDP-Knoten genannt wird, der für das Treffen von Entscheidungen über die Strukturierung einer Dienstfunktionskette auf der Basis eines Satzes von Dienstfunktionen, die SF-Funktionen genannt werden, und für das Mitteilen dieser Entscheidungen an andere Knoten der IP-Domain verantwortlich ist, und mindestens einen Knoten, der SF-Knoten genannt wird, der mindestens einer SF-Funktion zugeordnet wird, die auf dem SF-Knoten gehostet wird oder über den SF-Knoten zugänglich ist, wobei das Verfahren **dadurch gekennzeichnet ist, dass** es einen Schritt aufweist, bei dem ein Knoten des Netzes, der diagnostizierender Konten genannt wird, eine Diagnoseanfrage (DIAG_REQ) sendet, die mindestens eine Kennung (Service_Function_List), die Listenkennung genannt wird, von einer geordneten Liste von Kennungen von SF-Funktionen oder von IP-Adressen von SF-Knoten aufweist,
und dadurch, dass es ferner die folgenden iterativen Schritte aufweist:
- ein Knoten, der diagnostizierter Knoten genannt wird, der einer SF-Funktion, die diagnostizierte Funktion genannt wird, zugeordnet wird, empfängt eine Anfrage (DIAG_REQ), die mindestens die Listenkennung (Service_Function_List) aufweist,
- der diagnostizierte Knoten führt mindestens einen Diagnosevorgang aus, der die diagnostizierte Funktion betrifft, und
- wenn der Diagnosevorgang mit Erfolg durchgeführt wird, sendet der diagnostizierte Knoten eine Anfrage (DIAG_REQ), die mindestens die Listenkennung (Service_Function_List) aufweist, an einen SF-Knoten, der der SF-Funktion zugeordnet wird, die in der geordneten Liste der diagnostizierten Funktion folgt,
und dadurch, dass:
- wenn ein Diagnosevorgang misslingt oder zeigt, dass die diagnostizierte SF-Funktion nicht betriebsbereit ist, der diagnostizierte Knoten eine Antwort (DIAG_RES) sendet, die mindestens die Angabe des Misserfolgs des Diagnosevorgangs oder des Nichtfunktionierens oder der Fehlfunktion der diagnostizierten Funktion aufweist, oder
- wenn hingegen alle Diagnosevorgänge mit Erfolg durchgeführt worden sind, der diagnostizierte Knoten, der dieser letzten SF-Funktion der geordneten Liste zugeordnet wird, eine Antwort (DIAG_RES) sendet, die mindestens ein Ergebnis des Erfolgs der Diagnose aufweist.

3. Verfahren zur Diagnose von Dienstfunktionen in einer IP-Domain, umfassend mindestens einen Knoten, der PDP-Knoten genannt wird, der für das Treffen von Entscheidungen über die Strukturierung einer Dienstfunktionskette auf der Basis eines Satzes von Dienstfunktionen, die SF-Funktionen genannt werden, und für das Mitteilen dieser Entscheidungen an andere Knoten der IP-Domain verantwortlich ist, und mindestens einen Knoten, der SF-Knoten genannt wird, der mindestens einer SF-Funktion zugeordnet wird, die auf dem SF-Knoten gehostet wird oder über den SF-Knoten zugänglich ist, wobei das Verfahren **dadurch gekennzeichnet ist, dass** es einen Schritt aufweist, bei dem ein Knoten des Netzes, der diagnostizierender Konten genannt wird, eine Diagnoseanfrage (DIAG_REQ) sendet, die mindestens eine Kennung (Service_Function_Map_Index) einer Kette von SF-Funktionen, die SFC genannt wird, und optional eine Kennung (Tail_SF), die Sequenzendekennung genannt wird, von einer SF-Funktion aufweist, die eine Sequenz beendet, die in der SFC enthalten ist,
und dadurch, dass es ferner die folgenden iterativen Schritte aufweist:
- ein Knoten, der diagnostizierter Knoten genannt wird, der einer SF-Funktion, die diagnostizierte Funktion genannt wird, zugeordnet wird, die Teil der SFC oder gegebenenfalls der Sequenz ist, empfängt eine Anfrage (DIAG_REQ), die mindestens die Kennung (Service_Function_Map_Index) der SFC und gegebenenfalls die Kennung (TAIL_SF) des Sequenzendes aufweist,
- der diagnostizierte Knoten führt mindestens einen Diagnosevorgang aus, der die diagnostizierte Funktion betrifft, und
- wenn der Diagnosevorgang mit Erfolg durchgeführt wird, sendet der diagnostizierte Knoten eine Anfrage (DIAG_REQ), die mindestens die Kennung (Service_Function_Map_Index) der SFC und gegebenenfalls die Kennung (Tail_SF) des Sequenzendes aufweist, an einen SF-Knoten, der der SF-Funktion zugeordnet wird, die in der SFC der diagnostizierten Funktion folgt,
und dadurch, dass:
- wenn ein Diagnosevorgang misslingt oder zeigt, dass die diagnostizierte SF-Funktion nicht betriebsbereit ist, der diagnostizierte Knoten eine Antwort (DIAG_RES) sendet, die mindestens die Angabe des Misserfolgs des Diagnosevorgangs oder des Nichtfunktionierens oder der Fehlfunktion der diagnostizierten Funktion aufweist, oder
- wenn hingegen alle Diagnosevorgänge mit Erfolg durchgeführt worden sind, der diagnostizierte Knoten, der dieser letzten SF-Funktion der SFC und gegebenenfalls der SF-Funktion, die von der Kennung (TAIL_SF) des Sequenzendes identifiziert wird, zugeordnet wird, eine Antwort (DIAG_RES) sendet, die mindestens ein Ergebnis des Erfolgs der Diagnose aufweist.

4. Verfahren zur Diagnose nach einem der Ansprüche 1 bis 3, **dadurch gekennzeichnet, dass** der diagnostizierende Konten ein PDP-Knoten ist.

5. Verfahren zur Diagnose nach einem der Ansprüche 1 bis 3, **dadurch gekennzeichnet, dass** der diagnostizierende Konten ein SF-Knoten ist.

6. Knoten, der diagnostizierender Knoten genannt wird, in einer IP-Domain, umfassend mindestens einen Knoten, der PDP-Knoten genannt wird, der für das Treffen von Entscheidungen über die Strukturierung einer Dienstfunktionskette auf der Basis eines Satzes von Dienstfunktionen, die SF-Funktionen genannt werden, und für das Mitteilen dieser Entscheidungen an andere Knoten der IP-Domain verantwortlich ist, und mindestens einen Knoten, der SF-Knoten genannt wird, der mindestens einer SF-Funktion zugeordnet ist, die auf dem SF-Knoten gehostet wird oder über den SF-Knoten zugänglich ist, wobei der diagnostizierende Knoten **dadurch gekennzeichnet ist, dass** er Mittel aufweist, um:
- eine Diagnoseanfrage (DIAG_REQ) an einen SF-Knoten, der erster diagnostizierter Knoten genannt wird, der einer SF-Funktion zugeordnet ist, die erste diagnostizierte Funktion genannt wird, zu senden und
- eine Diagnoseantwort (DIAG_RES) von einem SF-Knoten, der letzter diagnostizierter Knoten genannt wird, zu empfangen, der einer SF-Funktion zugeordnet ist, die letzte diagnostizierte Funktion genannt wird, wobei die Antwort (DIAG_RES) mindestens die Angabe des Erfolgs oder des Misserfolgs des Diagnosevorgangs oder des Nichtfunktionierens oder der Fehlfunktion der letzten diagnostizierten Funktion aufweist.

7. Diagnostizierender Knoten nach Anspruch 6, **dadurch gekennzeichnet, dass**:
- der erste und der letzte diagnostizierte Knoten identisch sind,
- die erste und die letzte diagnostizierte Funktion identisch sind und
- die diagnostizierte SF-Funktion in der Anfrage (DIAG_REQ) identifiziert ist und/oder die einzige SF-Funktion ist, die dem diagnostizierten Knoten zugeordnet ist.

8. Diagnostizierender Knoten nach Anspruch 6, **dadurch gekennzeichnet, dass**:
- die Diagnoseanfrage (DIAG_REQ) mindestens eine Kennung (Service_Function_List), die Listenkennung genannt wird, von einer geordneten Liste von Kennungen von SF-Funktionen oder von IP-Adressen von SF-Knoten aufweist und
- die erste und die letzte diagnostizierte Funktion Teil der geordneten Liste sind.

9. Diagnostizierender Knoten nach Anspruch 6, **dadurch gekennzeichnet, dass**:
- die Diagnoseanfrage (DIAG_REQ) mindestens eine Kennung (Service_Function_Map_Index) einer Kette von SF-Funktionen, die SFC genannt wird, und optional eine Kennung (Tail_SF), die Sequenzendekennung genannt wird, von einer SF-Funktion aufweist, die eine Sequenz beendet, die in der SFC enthalten ist, und
- die erste und die letzte diagnostizierte Funktion Teil der SFC und gegebenenfalls der Sequenz sind.

10. Diagnostizierender Knoten nach einem der Ansprüche 6 bis 9, **dadurch gekennzeichnet, dass** der diagnostizierende Konten ein PDP-Knoten ist.

11. Diagnostizierender Knoten nach einem der Ansprüche 6 bis 9, **dadurch gekennzeichnet, dass** der diagnostizierende Konten ein SF-Knoten ist.

12. Knoten, der diagnostizierter Knoten genannt wird, in einer IP-Domain, umfassend mindestens einen Knoten, der PDP-Knoten genannt wird, der für das Treffen von Entscheidungen über die Strukturierung einer Dienstfunktionskette auf der Basis eines Satzes von Dienstfunktionen, die SF-Funktionen genannt werden, und für das Mitteilen dieser Entscheidungen an andere Knoten der IP-Domain verantwortlich ist, und mindestens einen Knoten, der SF-Knoten genannt wird, der mindestens einer SF-Funktion zugeordnet ist, die auf dem SF-Knoten gehostet wird oder über den SF-Knoten zugänglich ist, wobei der diagnostizierte Knoten ein SF-Knoten ist, der **dadurch gekennzeichnet ist, dass** er Mittel aufweist, um:
- von einem Knoten der IP-Domain eine Diagnoseanfrage (DIAG_REQ), die eine SF-Funktion betrifft, die diagnostizierte Funktion genannt wird, die dem diagnostizierten Knoten zugeordnet ist, zu empfange, und
- mindestens einen Diagnosevorgang auszuführen, der die diagnostizierte Funktion betrifft.

13. Diagnostizierter Knoten nach Anspruch 12, **dadurch gekennzeichnet, dass** er ferner Mittel aufweist, um eine Antwort (DIAG_RES) zu senden, die mindestens die Angabe des Erfolgs oder des Misserfolgs des Diagnosevorgangs oder des Nichtfunktionierens oder der Fehlfunktion der diagnostizierten SF-Funktion aufweist.

14. Diagnostizierter Knoten nach Anspruch 12, **dadurch gekennzeichnet, dass** er ferner Mittel aufweist, um die Diagnoseanfrage (DIAG_REQ) an einen anderen SF-Knoten zu übertragen, der einer SF-Funktion zugeordnet ist, die in der Diagnoseanfrage (DIAG_REQ) anvisiert ist.

15. System zur Diagnose von Dienstfunktionen in einer IP-Domain, **dadurch gekennzeichnet, dass** es mindestens einen diagnostizierenden Knoten nach einem der Ansprüche 6 bis 11 und mindestens einen diagnostizierten Knoten nach einem der Ansprüche 12 bis 14 aufweist.

16. Nicht abnehmbares oder teilweise oder vollständig abnehmbares Datenspeichermedium, umfassend Computerprogrammcode-Anweisungen zum Ausführen der Schritte eines Verfahrens zur Diagnose von Dienstfunktionen nach einem der Ansprüche 1 bis 5, die von einem diagnostizierenden Knoten umgesetzt werden, oder zum Ausführen der Schritte eines Verfahrens zur Diagnose von Dienstfunktionen nach einem der Ansprüche 1 bis 3, die von einem diagnostizierten Knoten umgesetzt werden.

17. Computerprogramm, das von einem Kommunikationsnetzwerk heruntergeladen und/oder auf einem computerlesbaren Medium gespeichert und/oder von einem Mikroprozessor ausgeführt werden kann, **dadurch gekennzeichnet, dass** es Anweisungen zum Ausführen der Schritte eines Verfahrens zur Diagnose von Dienstfunktionen nach einem der Ansprüche 1 bis 5, die von einem diagnostizierenden Knoten umgesetzt werden, wenn diese Schritte auf einem Computer ausgeführt werden, oder für das Ausführen der Schritte eines Verfahrens zur Diagnose von Dienstfunktionen nach einem der Ansprüche 1 bis 3, die von einem diagnostizierten Knoten umgesetzt werden, wenn diese Schritte auf einem Computer ausgeführt werden.

## Claims

1. Method for diagnosing service functions, in an IP domain comprising at least one node, termed PDP node, in charge of taking decisions relating to the structuring of a chain of service functions relying on a set of service functions, termed SF functions, and of notifying these decisions to other nodes of said IP domain, and at least one node, termed SF node, associated with at least one SF function hosted on said SF node or accessible via said SF node, said method being **characterized in that** it comprises the following steps:
- a node, termed diagnoser node, dispatches a request (DIAG_REQ) to an SF node, termed diagnosed node, relating to an SF function, termed diagnosed function, which is identified in the request (DIAG_REQ) and/or which is the only SF function associated with said diagnosed node,
- the diagnosed node carries out at least one diagnosis operation relating to said diagnosed function, and
- the diagnosed node dispatches a response (DIAG_RES) to said diagnoser node, said response (DIAG_RES) comprising at least the indication of the success or of the failure of the diagnosis operation, or of the non-functioning, or of the malfunctioning, of the diagnosed function.

2. Method for diagnosing service functions, in an IP domain comprising at least one node, termed PDP node, in charge of taking decisions relating to the structuring of a chain of service functions relying on a set of service functions, termed SF functions, and of notifying these decisions to other nodes of said IP domain, and at least one node, termed SF node, associated with at least one SF function hosted on said SF node or accessible via said SF node, said method being **characterized in that** it comprises a step in the course of which a node of the network, termed diagnoser node, dispatches a diagnosis request (DIAG_REQ) comprising at least one identifier (Service_Function_List), termed list identifier, of an ordered list of identifiers of SF functions or of IP addresses of SF nodes, and **in that** it furthermore comprises the following iterative steps:
- a node, termed diagnosed node, associated with an SF function, termed diagnosed function, forming part of said ordered list, receives a request (DIAG_REQ) comprising at least said list identifier (Service_Function_List),
- the diagnosed node performs at least one diagnosis operation relating to said diagnosed function, and
- if said diagnosis operation is carried out successfully, the diagnosed node dispatches a request (DIAG_REQ) comprising at least said list identifier (Service_Function_List) to an SF node associated with the SF function which follows, in said ordered list, the diagnosed function, and **in that**:
- if a diagnosis operation fails, or shows that the diagnosed SF function is not operational, the diagnosed node emits a response (DIAG_RES) comprising at least the indication of the failure of the diagnosis operation, or of the non-functioning, or of the malfunctioning, of the diagnosed function, or
- if on the other hand all the diagnosis operations have been carried out successfully, the diagnosed node associated with the last SF function of the ordered list emits a response (DIAG_RES) comprising at least one result of success of the diagnosis.

3. Method for diagnosing service functions, in an IP domain comprising at least one node, termed PDP node, in charge of taking decisions relating to the structuring of a chain of service functions relying on a set of service functions, termed SF functions, and of notifying these decisions to other nodes of said IP domain, and at least one node, termed SF node, associated with at least one SF function hosted on said SF node or accessible via said SF node, said method being **characterized in that** it comprises a step in the course of which a node of the network, termed diagnoser node, dispatches a diagnosis request (DIAG_REQ) comprising at least one identifier (Service_Function_Map_Index) of a chain of SF functions, denoted SFC, as well as, optionally, an identifier (Tail_SF), termed end-of-sequence identifier, of an SF function terminating a sequence included in said SFC,
and **in that** it furthermore comprises the following iterative steps:
- a node, termed diagnosed node, associated with an SF function, termed diagnosed function, forming part of said SFC or, if relevant, of said sequence, receives a request (DIAG_REQ) comprising at least said identifier (Service_Function_Map_Index) of the SFC and, if relevant, said end-of-sequence identifier (TAIL_SF),
- the diagnosed node performs at least one diagnosis operation relating to said diagnosed function, and
- if said diagnosis operation is carried out successfully, the diagnosed node dispatches a request (DIAG_REQ) comprising at least the identifier (Service_Function_Map_Index) of the SFC and, if relevant, the end-of-sequence identifier (Tail_SF), to an SF node associated with the SF function which follows, in the SFC, the diagnosed function,
and **in that**:
- if a diagnosis operation fails, or shows that the diagnosed SF function is not operational, the diagnosed node emits a response (DIAG_RES) comprising at least the indication of the failure of the diagnosis operation, or of the non-functioning, or of the malfunctioning, of the diagnosed function, or
- if on the other hand all the diagnosis operations have been carried out successfully, the diagnosed node associated with the last SF function of the SFC or, if relevant, with the SF function identified by the end-of-sequence identifier (TAIL_SF), emits a response (DIAG_RES) comprising at least one result of success of the diagnosis.

4. Diagnosis method according to any one of Claims 1 to 3, **characterized in that** said diagnoser node is a PDP node.

5. Diagnosis method according to any one of Claims 1 to 3, **characterized in that** said diagnoser node is an SF node.

6. Node, termed diagnoser node, in an IP domain comprising at least one node, termed PDP node, in charge of taking decisions relating to the structuring of a chain of service functions relying on a set of service functions, termed SF functions, and of notifying these decisions to other nodes of said IP domain, and at least one node, termed SF node, associated with at least one SF function hosted on said SF node or accessible via said SF node, said diagnoser node being **characterized in that** it possesses means for:
- dispatching a diagnosis request (DIAG_REQ) to an SF node, termed first diagnosed node, associated with an SF function, termed first diagnosed function, and
- receiving a response (DIAG_RES) from an SF node, termed last diagnosed node, associated with an SF function, termed last diagnosed function, said response (DIAG_RES) comprising at least the indication of the success or of the failure of the diagnosis operation, or of the non-functioning, or of the malfunctioning, of said last diagnosed function.

7. Diagnoser node according to Claim 6, **characterized in that**:
- said first and last diagnosed nodes are identical,
- said first and last diagnosed functions are identical, and
- the diagnosed SF function is identified in the request (DIAG_REQ) and/or is the only SF function associated with the diagnosed node.

8. Diagnoser node according to Claim 6, **characterized in that**:
- said diagnosis request (DIAG_REQ) comprises at least one identifier (Service_Function_List), termed list identifier, of an ordered list of identifiers of SF functions or of IP addresses of SF nodes, and
- said first and last diagnosed functions form part of said ordered list.

9. Diagnoser node according to Claim 6, **characterized in that**:
- said diagnosis request (DIAG_REQ) comprises at least one identifier (Service_Function_Map_Index) of a chain of SF functions, denoted SFC, as well as, optionally, an identifier (Tail_SF), termed end-of-sequence identifier, of an SF function terminating a sequence included in said SFC, and
- said first and last diagnosed functions form part of said SFC and, if relevant, of said sequence.

10. Diagnoser node according to any one of Claims 6 to 9, **characterized in that** said diagnoser node is a PDP node.

11. Diagnoser node according to any one of Claims 6 to 9, **characterized in that** said diagnoser node is an SF node.

12. Node, termed diagnosed node, in an IP domain comprising at least one node, termed PDP node, in charge of taking decisions relating to the structuring of a chain of service functions relying on a set of service functions, termed SF functions, and of notifying these decisions to other nodes of said IP domain, and at least one node, termed SF node, associated with at least one SF function hosted on said SF node or accessible via said SF node, said diagnosed node being an SF node **characterized in that** it possesses means for:
- receiving from a node of the IP domain a diagnosis request (DIAG_REQ) relating to an SF function, termed diagnosed function, associated with said diagnosed node, and
- carrying out at least one diagnosis operation relating to said diagnosed function.

13. Diagnosed node according to Claim 12, **characterized in that** it furthermore possesses means for emitting a response (DIAG_RES) comprising at least the indication of the success or of the failure of the diagnosis operation, or of the non-functioning, or of the malfunctioning, of said diagnosed SF function.

14. Diagnosed node according to Claim 12, **characterized in that** it furthermore possesses means for transmitting said diagnosis request (DIAG_REQ) to another SF node associated with an SF function targeted in the diagnosis request (DIAG_REQ).

15. System for diagnosing service functions in an IP domain, **characterized in that** it comprises at least one diagnoser node according to any one of Claims 6 to 11, and at least one diagnosed node according to any one of Claims 12 to 14.

16. Irremovable, or partially or totally removable means for storing data, comprising computer program code instructions for the execution of the steps of a method for diagnosing service functions according to any one of Claims 1 to 5 implemented by a diagnoser node, or for the execution of the steps of a method for diagnosing service functions according to any one of Claims 1 to 3 implemented by a diagnosed node.

17. Computer program downloadable from a communication network and/or stored on a medium readable by computer and/or executable by a microprocessor, **characterized in that** it comprises instructions for the execution of the steps of a method for diagnosing service functions according to any one of Claims 1 to 5 implemented by a diagnoser node when these steps are executed on a computer, or for the execution of the steps of a method for diagnosing service functions according to any one of Claims 1 to 3 implemented by a diagnosed node when these steps are executed on a computer.
